# EUROPÄISCHE PATENTANMELDUNG

(11) **EP 4 653 271 A2**
(43) Veröffentlichungstag der Anmeldung: **26.11.2025**
(21) Anmeldenummer: 25206811.9
(22) Anmeldetag: 20.12.2019
(51) Int. Cl.: B60T 13/00

(54) **REDUNDANTES BREMSSYSTEM MIT EINER DRUCKVERSORGUNG FÜR E- FAHRZEUGE UND FAHRZEUGE MIT AUTONOMEM FAHREN DER STUFE 3 (HAD) BIS STUFE 4 (FAD)**

(30) Priorität: 20.12.2018 DE 102018133218; 10.07.2019 DE 202019107191 U; 30.08.2019 DE 202019107193 U
(62) Teilanmeldung aus: 23161067.6
(71) Anmelder: IPGATE AG, 8808 Pfäffikon SZ (CH)
(72) Erfinder: Leiber, Thomas, 22203 Rogoznica (HR)
(74) Vertreter: DTS Patent- und Rechtsanwälte PartmbB

(57) **Zusammenfassung**

Das Bremssystem für ein Fahrzeug weist folgende Komponenten auf: Eine Druckversorgungseinrichtung (DV1, DV2), eine elektronische Steuer- und Regeleinrichtung (DV ECU1, DV ECU2) und Ventilanordnung (HCU) und zwei hydraulisch wirkenden Radbremsen (EHB) für die Vorderachse. Eine elektromechanische Radbremse (EMB) oder eine hydraulisch unterstützte elektromechanische Radbremse (H-EMB) ist für je ein Rad der Hinterachse vorhanden, sowie ein elektrischer Traktionsmotor (TM1, TM2) und eine übergeordnete zentrale Steuereinheit (M-ECU). Diese ist dazu eingerichtet, das Bremssystem so anzusteuern, dass zur Erzeugung eines Giermoments bzw. Lenkungseingriffs mittels der Radbremsen (EHB, EMB, H-EMB) und/oder des zumindest einen Traktionsmotors (TM1, TM2) unterschiedliche Bremsmomente an den Achsen zur Bremskraftverteilung und/oder an den Rädern einer Achse erzeugt werden. Wahlweise kann sich auch Bremssystem so steuern, dass ein kombinierter Einsatz der Druckversorgungseinrichtung(en) (DV1), hydraulisch unterstützter elektromechanischen Bremse(n) (H-EMB), elektrische(r) Parkbremse(n) (EPB) und/oder elektromechanische(r) Bremse(n) (EMB) und/oder Antriebsmotor(en) (TM, TM1, TM2) im Regelbetrieb für einen schnelleren Bremskraftanstieg erfolgt.

## Beschreibung

Die vorliegende Erfindung betrifft eine Vorrichtung für ein hydraulisches Betätigungssystem für eine Bremse für Elektrofahrzeuge und insbesondere Fahrzeuge mit hochautomatisiertem (HAD) oder vollautomatisiertem Fahren (FAD)

### Stand der Technik

Die Automobilindustrie befindet sich in einem disruptiven Veränderungsprozess. Neben der zunehmenden Marktdurchdringung von Elektrofahrzeugen werden verschiedene Stufen des automatisierten Fahrens durchlaufen, dies sind zunächst: Stufe 3 - Hoch Automatisiertes Fahren - HAD, Stufe 4 - Voll Automatisiertes Fahren - FAD und Stufe 5 - Autonomes Fahren - AD, wobei bei jeder Stufe die Anforderungen an die verwendeten Bremssysteme steigen. Hierdurch wurde die Entwicklung von neuen Bremssystemen vorangetrieben. Die Ablösung von Vakuumbremskraftverstärkern durch elektrische Bremskraftverstärker (e-BKV) begann 2005 nach ersten Lösungsansätzen [ATZ Ausgabe 6/11] mit der Markteinführung von sog. 2-Box-Lösungen mit elektrischen Folgebremskraftverstärkern und zusätzlicher ESP-Einheit im Jahr 2013 [ATZ- Ausgabe 4/18], zeitnah gefolgt durch erste integrierte 1-Box Systeme mit Pedalsimulator im Jahr 2017 [Bremsenhandbuch - Kapitel 20]. Aktuell werden Lösungen für die Stufe 3 (HAD) entwickelt. Ab Stufe 3 (HAD) ist eine redundante Druckversorgung erstmalig zwingend erforderlich. Zudem ist eine Verbindung der Bremskreise mit dem Vorratsbehälter bei offenen Bremssystemen weitestgehend zu vermeiden und Pedalgefühlsimulatoren mit konstanter Pedalcharakteristik einzusetzen. Weiter muss auch eine Redundanz der ABS-Funktion bereitgestellt werden. Dies wird bei sog. 2-Box-Systemen mit elektrischem Bremskraftverstärker und ESP/ABS- Aggregat gemäß Stand der Technik gemäß DE 11 2009 005 541 B3 derart realisiert, dass der elektrische Bremskraftverstärker (e-BKV) eine Druckmodulati- ons-Funktion bei Ausfall des ESP-Aggregates übernimmt, um stets eine hohe Fahrzeugverzögerung zu gewährleisten. Hier wurde im ersten Schritt eine sog. "ABS select-low Regelung" eingeführt.

Ab Stufe 4 (FAD) werden für ausreichende Systemverfügbarkeit 3-fach Redundanzen erwartet, z.B. bei den Pedalsensoren mit der Regel"2 aus 3". Zudem ist ein Pedalsimulator wegen zunehmender Rekuperationsleistung von Elektrofahrzeugen und fehlender Akzeptanz der Veränderung der Pedalcharakteristik zwingend, weil vollautomatisches Fahren (FAD) über eine längere Zeitdauer betrieben werden kann und der Fahrer bei Übergang auf pilotiertes Fahren nicht auf eine Veränderung der Pedalcharakteristik vorbereitet ist. Zur Überwachung der Druckversorgung ist ein redundanter Druckgeber vorzusehen bzw. eine alternative Diagnosemöglichkeit vorzusehen. Weiter wird eine redundante ABS-Funktion mit zumindest achsindividueller Regelung gefordert werden und es werden Teilredundanzen eingeführt. Bremssysteme mit geschlossenen Bremskreisen im ABS-Betrieb haben Sicherheitsvorteile.

In Stufe 5 (AD) sind Pedalweggeber und Pedalsimulator sowie deren Charakteristik nicht mehr relevant. Dagegen werden die restlichen Komponenten und Teilsysteme eine 3-fach Redundanz, mit der Regel"2 aus 3" bei Sensoren, Steuer- und Regeleinheiten ECU und Teil-ECU, oder mehrfach Redundanz, aufweisen. Zudem ist eine vollkommene Redundanz für die radindividuelle Regelung vorzusehen.

Mehrere neue Fahrzeughersteller wie z.B. Apple, Uber oder Waymo arbeiten an komplett autonom fahrenden Fahrzeugen ohne Fahrer, die in der ersten Ausbaustufe ein Bremspedal mit einfacher Pedalgefühlsimulatoreinheit aufweisen (Stufe 4 FAD) und in der letzten Ausbaustufe (Stufe 5 AD) kein Bremspedal mehr haben sollen. Zudem setzen sich Fahrzeuge mit starken elektrischen Antriebsmotoren sowohl an der Hinterachse als auch an der Vorderachse zunehmend durch.

Neben den beschriebenen elektrohydraulischen Bremssystemen gibt es die elektromechanische Bremse (EMB, elektromechanische Keilbremse) als bekannten Lösungsansatz. Die EMB hat sich in der Vergangenheit aufgrund von Sicherheitsbedenken und hohen Kosten nicht durchgesetzt. Die hohen Kosten sind insbesondere darin begründet, dass für jede Radbremse ein Elektromotor sowie ein aufwändiger elektromechanischer Mechanismus erforderlich ist. Zudem hat eine EMB sehr viele elektrische Kontaktstellen, die bekanntlich fehleranfälliger als hydraulische Leitungen sind.

Bremssysteme für die Stufen FAD und AD können aus Kosten- und Zuverlässigkeitsgründen nicht ausschließlich EMB oder Keilbremsen aufweisen. Eine EMB ist nur für die Hinterachse eines Fahrzeuges geeignet, weil die Hinterachse geringeren Anteil an der Bremskraft hat und ein Ausfall nicht so kritisch betrachtet wird wie an der Vorderachse. So ist ein hydraulisches Bremssystem mit Regelung im vorwiegenden geschlossenen Bremskreis über eine elektrische angetriebene Kolben-Zylinder-Einheit zu präferieren.

In DE 10 2005 055 751 B4 und DE 10 2005 018 649 B4 ist die hochpräzise Kolbendruckregelung (PPC = Piston Pressure Control) mittels einer elektrisch angetriebenen Kolben-Zylinder-Einheit mit Spindeltrieb ausgeführt. Der Druck wird unter Verwendung eines nicht-linearen Kennfeldes, der sog. Druck- Volumen-Kennlinie gesteuert, in dem der Zusammenhang zwischen Druck und Kolbenposition ausgewertet wird. Alternativ oder ergänzend wird der Druck durch Phasenstromsteuerung des Elektromotors genutzt, wobei der physikalische Zusammenhang der Proportionalität zwischen Strom zu Drehmoment und aufgrund einer bekannten Kolbenfläche und festen Getriebeübersetzung auch Proportionalität zwischen Strom und Druck besteht und genutzt wird. Mit diesen beiden Kenngrößen kann der Druck und der Druckänderungsverlauf sehr genau geregelt werden. In EP 1 874 602 B1 und EP 2 396 202 B1 ist das sog. Multiplex-Verfahren (MUX) beschrieben, dass sich besonders für die Anforderungen der Stufe 4 und 5 eignet, da ein geschlossenes Bremssystem, wie später ausgeführt, keine schlafenden Fehler aufweist. Zudem können mehrere Radbremsen mit nur je einem Schaltventil gleichzeitig oder nacheinander im Druck auf- und abgebaut werden. Nachteilig sind die hohen Dynamikanforderungen an den Elektromotor, insbesondere wenn alle Radbremsen mit einem Motor geregelt werden. Dies erfordert einen speziellen Motor mit doppelten Luftspalt

(EP 1 759 447 B1) oder einen Motor mit sehr geringer Trägheitsmasse.

In WO201614622A2 ist zudem eine spezielle Ventilschaltung von Schaltventilen ausgeführt, wo der Innenraum des Schaltventils über eine Hydraulikleitung mit dem zugehörigen Bremskreis und der Ventilsitzausgleich über eine Hydraulikleitung mit der zugehörigen Radbremse verbunden ist. Diese Ventilschaltung ist insbesondere für das MUX-Verfahren mit nur einem Schaltventil pro Bremskreis geeignet, da sich im Fehlerfall das Magnetventil durch den Druck in der Radbremse öffnet und damit verhindert, dass der Druck in der Radbremse eingesperrt bleibt, was zur ungewollten Fahrzeugverzögerung führt.

Aus EP 3 271 221 A2 ist ein weiterentwickeltes MUX-Verfahren (MUX 2.0) mit nur einem Auslassventil je Bremskreis bekannt. Damit können die Dynamikanforderungen für den Multiplex-Betrieb deutlich reduziert werden, weil Druck auch über Auslassventile in Situationen mit extrem hohen Druckänderungsdynamikanforderungen abgebaut werden kann und das Bremssystem im Normalbetrieb im geschlossenen Bremskreis betrieben wird. Hierdurch können die Dynamikanforderungen an den Elektromotor deutlich reduziert werden bzw. eine sehr gute Regelung im Multiplex-Verfahren erreicht werden.

Aus WO 2012 059 175 A1 ist eine vorteilhafte Betätigungseinheit (BE) mit zwei Wegsensoren und dazwischen wirkendem elastischem Element bekannt, womit Differenzwege und/oder Differenzkräfte gemessen und von der Steuerung des Bremssystems verwertet werden. Ein Bremssystem mit einer derartigen Betätigungseinheit ergänzt um einen Pedalgefühlsimulator erfordert Anforderungen an Mehrfachredundanzen der Stufe 3 bis Stufe 5. Bestimmte Komponenten von Bremssystemen sind als sicherheitskritisch zu betrachten. Dies sind Dichtungen von Kolben, Magnetventile und Kugelgewindetrieb. In der nachfolgenden sind verschiedene Fehler und deren Auswirkungen aufgeführt:
- Kolben : Kolbendichtungen können ausfallen, wobei die Undichtigkeit z.B. noch nicht bei kleinen Drücken, sondern erst bei hohem Drücken auftreten kann. Eine Undichtigkeit führt zu einem Ausfall der Kolbenfunktion. Kolben werden in Wegsimulatoren, Druckversorgungen und Hauptbremszylindern (HZ) eingesetzt und können zu Pedaldurchfall bzw. Ausfall der Druckversorgung führen.
- Magnetventile: Schmutzpartikel können sich im Ventilsitz absetzen.

Wenn Magnetventile in einem offenen Bremssystem z.B. mit dem Vorratsbehälter verbunden sind, können sich beim Schließvorgang Partikel absetzen und die Verbindung ist nicht dicht. Die Dichtigkeit kann im geöffneten Zustand nicht diagnostiziert werden.
- Kugel-Gewinde-Trieb: Kugel-Gewinde-Triebe verschleißen über Lebensdauer und können klemmen, insbesondere wenn Schmutzpartikel in den Kugel-Gewinde-Trieb gelangen. Dies kann zu Ausfällen der Druckversorgung führen.

Die Anforderungen für Bremssysteme der Stufe 3 (HAD), Stufe 4 (FAD) und Stufe 5 (AD) und bei E-Fahrzeugen, die zunehmend starke elektrische Antriebsmotoren an einer oder mehreren Achsen aufweisen, lassen sich wie folgt zusammenfassen :
- absolut geräuschloser Betrieb, d.h. keine störenden Geräusche von Aggregaten an der Spritzwand;
- noch kürzere Bauweise als bei konventionellen PKWs aufgrund neuer Fahrzeug-Plattformkonzepten bei E-Fahrzeugen;
- Radindividueller oder achsindividueller Bremseingriff, auch bei Komplett- oder Teilausfall von Modulen; - Funktionsumfang ABS, ESP, ASR, Rekuperation und Torque Vectoring mit möglichst geringer Einschränkung der Leistungsfähigkeit auch bei Komplett- oder Teilausfall von Modulen;
- Maximale Rekuperation der kinetischen Energie des Fahrzeuges durch maximale Ausnutzung der Bremsleistung durch Elektromotoren; daher dynamische und genaue bedarfsgerechte Steuerung des hydraulischen Bremssystems;
- Nutzung von verfügbaren Bremsmomenten, z.B. von Antriebsmotoren für Vereinfachung der Bremssysteme bzw. Verkürzung des Bremsweges;
- Verstärkte Sicherheit durch Redundanz der Systeme, Signalübertragungen und Stromversorgung;
- Diagnoseverfahren zur Erkennung von Leckagen bzw. Vermeidung schlafender Fehler;
- hohe Anforderungen an die Regelgenauigkeit zur weiteren Bremswegverkürzung, insbesondere beim gemeinsamen Wirken von elektrischen Antriebsmotoren und hydraulischen Bremsmomenten;
- hohe Modularität der Systeme, d.h. der Verwendung von gleichen Teilen/Modulen, insbesondere bei der Druckversorgung; Modularität ist getrieben durch eine Vielzahl an Fahrzeugantriebskonzepten, insbesondere in einer Koexistenz von Fahrzeugen mit Verbrennungsmotoren, Hybridfahrzeugen und reinen E-Fahrzeugen (Verbrennungsmotoren, Hybridmotoren, reine E-Fahrzeuge, fahrerlose Fahrzeuge).

### Aufgabe der Erfindung

Aufgabe der vorliegenden Erfindung ist es, ein Bremssystem bereitzustellen, das für die Anforderungen der hohen Verfügbarkeit beim hochautomatisierten Fahren (HAD) und vollautomatisierten Fahren (FAD) erfüllt und auch für E- Fahrzeuge geeignet ist.

Lösung der Aufgabe Die Aufgabe der Erfindung wird durch ein Bremssystem mit den Merkmalen des Patentanspruchs 1 gelöst. Vorteilhafte Ausgestaltungen des Bremssystems nach Anspruch 1 ergeben sich durch die Merkmale der Unteransprüche.

Die Erfindung zeichnet sich vorteilhaft dadurch aus, dass das erfindungsgemäße Bremssystem eine genügend hohe Redundanz von systemrelevanten Komponenten für das hochautomatisierte vollautomatisierte Fahren (HAD, FAD) bereitstellt und gleichzeitig hohe Synergieeffekte im Zusammenwirken des Bremssystems mit elektrischen Antriebsmotoren von Elektrofahrzeugen genutzt werden können. So ist beispielweise die Energierückgewinnung von kinetischer Energie durch den Elektromotor nicht durch das Bremssystem wie zum Beispiel bei Folgebremskraftverstärkern ohne Wegsimulator gemäß DE 11 2009 005 541 B3 eingeschränkt, gleichzeitig kann der Elektromotor zum Bremsen beitragen. So wird das erfindungsgemäße Bremssystem vorteilhaft für HAD und FAD mit einer Betätigungseinheit (BE) mit Pedalfühlsimulator ausgestattet.

Für die Stufe 4 (FAD) sollte für das vollautomatisierte Fahren eine Betätigungseinheit mit entsprechenden Redundanzen vorgesehen werden. Die Betätigungseinheit weist dabei eine hydraulische Verbindung zu mindestens einem Bremskreis auf.

Es ist zudem vorteilhaft, eine zentrale Regel- und Steuereinheit (M-ECU) vorzusehen, die den einzelnen Komponenten des Bremssystems übergeordnet ist und diese steuert.

Für die radindividuelle redundante Bremsregelung sieht die Erfindung in einer Basisausführungsform vor, dass eine Druckversorgungseinrichtung die Druckregelung entweder in nur einer Achse oder in beiden Achsen des Fahrzeugs vornimmt. Dabei weist die Druckversorgungseinrichtung vorteilhaft zwei voneinander unabhängige elektronische Steuer- und Regeleinheiten oder eine zweifach-redundante Steuer- und Regeleinheit zur Ansteuerung ihres elektromotorischen Antriebs auf, derart, dass bei Ausfall einer Steuer- und Regeleinheit die andere noch funktionsfähige Steuer- und Regeleinheit den Antrieb noch ansteuern kann. Jede der beiden elektronischen Steuer- und Regeleinheiten steuert dabei vorteilhaft voneinander getrennte Wicklungs- bzw. Phasensysteme des elektromotorischen Antriebs an. Hierdurch ist vorteilhaft gewährleistet, dass bei Ausfall eines Wicklungs- bzw. Phasensystems der Antriebsmotor zumindest noch mit einem verminderten, z.B. dem halben maximalen, Drehmoment betrieben werden kann. Durch diese Ausbildung ist eine mehrfache Redundanz zumindest für die Druckversorgungseinrichtung und deren Ansteuerung gegeben.

In einer weiteren Ausführungsform kann die Druckversorgungseinrichtung zusammen mit der Ventilanordnung und der mindestens einen, der Druckversorgungseinrichtung zugeordneten elektronische Steuer- und Regeleinheit zu einem Modul bzw. Baugruppe zusammengefasst sein. Hierdurch ergibt sich eine kompakte und kostengünstige Einheit, die platzsparend und einfach in dem Fahrzeug untergebracht und montiert werden kann.

Die Betätigungseinrichtung, insbesondere in Form eines Bremspedals, wirkt vorteilhaft auf eine Kolben-Zylinder-Einheit, wobei über eine hydraulische Verbindung zu mindestens einem Bremskreis im Fehlerfalle ein Bremsdruck mit der Betätigungseinrichtung aufbaubar ist. Hierbei kann ein einfacher Hauptbremszylinder oder ein Tandem-Hauptzylinder, optional mit redundanten Dichtungen, und zwingend erforderlichem Wegsimulator vorgesehen werden.

Vorteilhaft regeln die vorbeschriebenen Bremssysteme im Regelbetrieb mit geschlossenem Bremskreis, d.h. im Regelbetrieb erfolgt kein Druckabbau über Magnetventile in den Vorratsbehälter, und/oder der Druck in den Radbremsen des jeweiligen Bremskreises wird im Multiplexverfahren und/oder gleichzeitig eingeregelt bzw. eingestellt. Zur Sicherheit sollten die Schaltventile derart an die Radbremsen angeschlossen sein, dass sie sich durch Druck in der Radbremse selbstständig öffnen. Hierdurch ist vorteilhaft gewährleistet, dass in jedem Fall der Bremsdruck in den Radbremsen abgebaut werden kann und es nicht zu unerwünschtem Abbremsen bzw. Blockieren der Räder kommt.

Ebenso ist es von Vorteil, wenn bei den vorbeschriebenen Bremssystemen ein Druckabbau im Regelbetrieb, insbesondere bei sehr hohen Druckdynamikanforderungen z.B. bei high^-ABS-Regelung, insbesondere bei Ausfall einer Druckversorgungseinrichtung und/oder einer Steuer- und Regeleinrichtung einer Druckversorgung in einer Radbremse über das Öffnen eines Auslassventils in den Vorratsbehälter, insbesondere im erweiterten Multiplexbetrieb, sog. MUX 2.0-Verfahren, bei dem eine Druckversorgungseinrichtung für alle Radbremsen die Druckregelung übernimmt, erfolgt.

In einer weiteren sehr vorteilhaften Ausgestaltung der vorbeschriebenen Bremssysteme ist mindestens eine Radbremse, vorzugsweise zwei Radbremsen, eine hydraulisch unterstützte elektromechanische Bremse (H-EMB), eine elektrische Parkbremse (EPB) oder eine elektromechanische Bremse (EMB). Gleichsam kann neben einer herkömmlichen hydraulischen Radbremse ein Elektromotor einer zusätzliche Parkbremse oder einer hydraulisch unterstützten Bremse oder elektromechanischen Bremse auf das Rad abbremsend einwirken. Durch diese Maßnahme wird eine weitere Redundanz geschaffen.

Bei dem Vorsehen einer hydraulisch unterstützten elektromechanischen Bremse kann vorteilhaft mit dieser sowohl hydraulisch als auch elektromechanisch eine Bremskraft aufgebaut werden.

Beim Vorsehen mindestens eines elektrischen Antriebs- bzw. Traktionsmotors für mindestens eine Achse oder Rad des Fahrzeugs kann dieser vorteilhaft für das Abbremsen einer Achse oder eines Rades mit genutzt werden. Hierdurch ist eine weitere Redundanz gegeben. So kann im Regelbetrieb oder bei Ausfall einer Komponente des Bremssystems, z.B. der Druckversorgungseinrichtung, auch noch eine (unterstützende) Bremskraft mittels des bzw. der Traktions- motors(-en) erzeugt werden. Durch einen kombinierten Einsatz von Druckversorgungseinrichtung, hydraulisch unterstützter elektromechanischen Brem- se(n) H-EMB, elektrischer(n) Parkbremse(n) EPB und/oder elektromechani- scher(n) Bremse(n) EMB und/oder einem oder mehrerer Antriebsmotor(en) kann vorteilhaft im Regelbetrieb oder bei Ausfall einer oder mehrerer Komponenten des Bremssystem ein schnellerer Bremskraftanstieg mit kürzerer Time to Lock (TTL) erfolgen bzw. ein höheres Bremsmoment erzeugt werden.

Vorteilhaft kann bei den vorbeschriebenen Bremssystemen der Druckversorgungseinrichtung ein Trennventil am Ausgang der Druckversorgung vorgeschaltet sein, wobei durch Verschließen des Trennventils die Druckversorgungseinrichtung, insbesondere bei deren Ausfall, von dem bzw. den Brems- kreis(en) abtrennbar ist.

Um das erfindungsgemäße Bremssystem noch sicherer gegen Ausfall zu machen, kann mindestens eine Steuer- und Regeleinrichtung einer Druckversorgungseinrichtung und deren Ventilanordnung eine separate Spannungsversorgung und/oder Signalübertragung aufweisen, insbesondere alle Module der Druckversorgungseinrichtung, durch mindestens zwei Bordnetze versorgt werden und/oder redundante Signalübertragungen aufweisen. Unter zwei Bordnetzen wird verstanden, dass entweder unterschiedliche Spannungsebenen und/oder Spannungsquellen zur Versorgung des Bremssystems dienen.

Es ist ferner von Vorteil, wenn bei den vorgenannten möglichen Ausführungsformen des erfindungsgemäßen Bremssystems entweder die Druckregelung in einem Bremskreis unter Verwendung mindestens eines Drucksensors und/oder über die Strommessung des Motorstroms des Antriebes und Wegsteuerung des Kolbens der Druckversorgungseinrichtung erfolgt, welche durch Berücksichtigung der Temperatur des Antriebes weiter in der Druckregelgüte verfeinert werden kann. Hierdurch ist eine präzise Druckregelung auch ohne Drucksensor möglich, wie sie bereits in DE 10 2005 055 751 B4 des Anmelders in Funktion ohne Temperatursensor ausführlich erläutert ist.

Ebenso von Vorteil ist, wenn die Kolben-Zylinder-Einheiten des Bremssystems redundante Dichtungen und hydraulische Diagnoseleitungen aufweisen und zudem redundante Regel- und Steuereinheiten vorgesehen sind, und dass die Antriebe der Druckversorgungseinrichtungen 2x3 Phasen aufweisen, und dass mittels Sensoren der Motorphasenstrom iphase, der Motorwinkel a, insbesondere die Temperatur T, gemessen und bei der Druckregelung berücksichtigt wird, und dass eine redundante Versorgung über zwei Bordnetze bzw. Spannungsniveaus gegeben ist, und dass eine redundante Signalübertragung vorgesehen ist. Durch das Vorsehen all dieser Maßnahmen ergibt sich vorteilhaft ein sehr sicheres System für die Stufe 3 und 4.

Vorteilhaft können die vorbeschriebenen Bremssysteme derart betrieben werden, dass mindestens achsweise, vorzugsweise radindividuell, die Verzögerung der Räder mittels der Druckversorgungseinrichtung, dem bzw. den elektrischen Antriebsmotor(en) und der hydraulisch unterstützten elektromechani- sehen Bremse (H-EMB) bzw. der elektromechanischen Bremse (EMB), erfolgt. Auch kann Torque-Vectoring mittels der Druckversorgungseinrichtung(-en), dem bzw. den elektrischen Antriebsmotor(en) (TM) und der hydraulisch unterstützten elektromechanischen Bremse (H-EMB) bzw. der elektromechanischen Bremse (EMB), vorgenommen werden.

Bei Verwendung eines Temperatursensors kann zudem die Temperatur des Antriebes der Druckversorgungseinrichtung(en) ermittelt werden und die Temperatur zur genaueren Ermittlung der Drehmomentenkonstante verwendet werden, welche sich durch Temperaturanstieg linear um den Faktor (1- Br%*AT) linear verringert. Damit kann eine noch genauere Regelung des Drehmoments und damit des Drucks vorgenommen werden sofern diese auf Basis des Phasenstroms i erfolgt, da der Zusammenhang Drehmoment = kt(T) * Phasenstrom i gilt.

Zur Druckregelung kann neben der Stromregelung auch die Kolbenposition und die Druckvolumenkennlinie herangezogen werden und die Veränderung der Druckvolumenkennlinie bei z.B. Lufteinschluss, durch den Drucksensor o- der die H-EMB angepasst werden. Durch den kombinierten Einsatz beider zuvor beschriebenen Verfahren ergibt sich eine hochpräzise Druckregelung, die auch ohne Drucksensor möglich ist. Dieses Verfahren liefert weitere Redundanz bei Ausfall von Druckgebern oder kann auch zur Vereinfachung des Systems mit geringen Redundanzanforderungen (z.B. System mit nur einem oder ohne Druckgeber), eingesetzt werden.

Das erfindungsgemäße Bremssystem kann zudem zur Lenkung/Torque Vekto- ring verwendet werden, wobei die radindividuellen Regelmöglichkeiten mit der mindestens eine Druckversorgung sowie die hydraulisch unterstützte elektromechanischein) Bremse(n) H-EMB, elektrische(n) Parkbremse(n) EPB und/oder elektromechanische(n) Bremse(n) EMB und/oder Antriebsmotoren oder der Lenkung EPS verwendet werden können.

Die Erfindung zeichnet sich somit durch einen sehr einfachen Aufbau mit sehr hoher Verfügbarkeit, d.h. bei Komplett bzw. Teilausfall von Modulen wird die Funktion nicht bzw. in sehr geringem Umfang eingeschränkt. Auch bei Ausfall diverser Komponenten kann immer annähernd max. Verzögerung sowie Fahr- Stabilität sichergestellt werden. Dazu ist auch bei Ausfall einer Druckversorgungseinrichtung eine Verzögerung bis annähernd 0,9g, und eine achsweise Regelung, vorzugsweise radindividuelle Regelung mit Lenkeingriff/Stabilitätseingriff gewährleistet. Eine hohe Verfügbarkeit und Performance wird somit - noch einmal zusammenfassend - durch folgende Maßnahmen erreicht, die einzeln oder in Kombination vorgesehen werden können:
- vornehmlicher Betrieb im geschlossen Bremskreis (>90% der Betriebszeit) sowohl im Bremskraftverstärker (e-BKV), Rekuperationsbetrieb als auch vorwiegend im ABS-Regelbetrieb, damit werden schlafende Fehler vermieden. Wird das System offen betrieben, z.B. ist im ABS durch Öffnung eines Auslassventils der Radkreis mit dem Vorratsbehälter hydraulisch verbunden, sind unerkannte Undichtigkeiten bei Ventilen und Dichtungen (schlafende Fehler) besonders schwer zu erkennen. Daher ist der Betriebszustand zu vermeiden bzw. eine Diagnose der Dichtigkeit nach jedem ABS-Betrieb sinnvoll; eine Diagnose kann derart erfolgen, dass z.B. im Stillstand der Kolben der Druckversorgung bei geschlossenen Ventilen bewegt wird und ein Volumenverlust oder Druckanstieg ermittelt und ausgewertet wird.
- Redundanzen und Teilredundanzen der DV-Motorelektronik: z.B. Ausführung des Motors der DV als 2 x 3 Phasenmotor sowie Teilredundanz der Motoransteuerung. Damit kann bei Ausfall einer Teilelektronik (Wicklungskurzschluss, Ausfall eines 3-Phasenstranges der Motor noch mit halbem Drehmoment betrieben werden. Bei einer Auslegung auf 200 bar kann dann auch bei Ausfall noch 100 bar, d.h. näherungsweise der Blockierdruck erreicht werden. Damit ist auch bei Ausfall einer Elektronik noch ein ABS-Betrieb mit maximaler Leistung bei Niedrigreibwerten und zufriedenstellender Leistung bei Straßenzuständen mit hohem Reibwert möglich;
- Teilredundanzen der Elektronik für die Ventilansteuerung. Fällt die Elektronik aus, ist es für die Verfügbarkeit sehr vorteilhaft, wenn die Schaltventile noch betätigt werden können. Somit ist in der Elektronik eine Redundanz für die Ventilansteuerung vorzusehen, damit die Ventilbetätigung noch funktioniert bei Ausfall der Motorsteuerung; - Betrieb im geschlossenen MUX-Betrieb mit Schaltventilen und Einsatz von Auslassventilen (mindestens 1 AV je Achse) im Fehlerfall, d.h. Ausfall o- der Teilausfall einer Druckversorgung. Damit kann mit geringer Motorleistung die Druckregeldynamik noch aufrechterhalten werden, da der Druck sowohl durch die Druckversorgung sequentiell oder simultan auf- und abgebaut werden kann, sondern auch ein Druckabbau über Auslassventile erfolgen kann;
- Einsatz einer H-EMB, EMB oder EPB im Bremsbetrieb, insbesondere Einsatz EPB oder H-EMB beim Ausfall von Modulen. Damit kann zum einem eine Radbremsung über den hydraulischen Zugang sowie über den in der H-EMB verbauten Elektromotor erfolgen. Der Elektromotor kann als EC- Motor oder Bürstenmotor ausgeführt werden. Somit kann eine Bremskraftunterstützung durch den Elektromotor am jeweiligen Rad erfolgen;
- Nutzung der eingesetzten Traktionsmotoren zur Steigerung des Bremsmomentes bei gleichzeitiger Rekuperation von kinetischer Fahrzeugenergie. Aufgrund der hohen Trägheitsmassen des Antriebsmotor ist jedoch zu berücksichtigen, dass ein Bremsmoment über den Traktionsmotor weniger dynamisch aufgebaut werden kann als über die Druckversorgung und die H-EMB, EPB oder EMB;
- Einsatz einer fehlersicheren und diagnosefähigen Betätigungseinheit mit Pedalgefühlsimulator, redundanten Wegsensoren und einem Kraft-Weg- Sensor (KWS) sowie einer speziellen Schaltung zur Diagnose des Pedalgefühlsimulators;
- Einsatz von Ventilen mit Selbstöffnungsmechanismus durch Druckbeaufschlagung durch den in der Radbremse eingeschlossenen Druck, insbesondere im stromlosen Zustand;
- Nutzung einer hydraulischen Rückfallebene in einem Bremskreis bzw. einer Achse über Verbindung der Betätigungseinheit über ein Schaltventil FV;
- Nachfördern von Volumen der DV bei Erreichen der Volumengrenze;
- Betrieb der Druckstellung ohne Druckgeber durch intelligente genaue Drehmomentschätzung aus dem Phasenstrom unter Einbeziehung der Motortemperatur und der Druckvolumenkennlinie, die über einen Druckgeber oder die H-EMB-Funktion abgeglichen wird; - Umschalten von Normalbetrieb 2 Radbetrieb im MUX-Verfahren auf 4-Radbetrieb im MUX 2.0 Verfahren mit AV bei Ausfall einer DV
- Einsatz von Trapezspindel (kein Blockieren der Spindel durch Schmutz partikel in der Laufbahn des Kugel-Gewinde-Triebes);
- Selbsthemmende Trapezspindel -> Verzicht auf FV und TV.

In der Tabelle 1 sind die verschiedenen Radregelfunktionen für den
Normalbetreib (Regelbetrieb) und vier verschiedene Fehlerfälle Fehler 1 bis Fehler 4 aufgeführt.

Der Normalbetrieb ist in der ersten Zeile dargestellt und erläutert. Die Druckversorgungseinrichtung DV erzeugt die maximal erforderliche Regelleistung. Die Auslassventile AV werden für 90-99% der Regelzeit nicht genutzt und nur bei extremen Situationen zum schnellen Druckabbau in den Vorratsbehälter geöffnet. Pedalgefühl ist konstant, da komplett entkoppelter Brake-by-Wire Betrieb. Mittels der elektrischen Antriebsmotoren TM1 und TM2 wird Energie rekuperiert und der Druckverlauf der Druckversorgung an den zeitlichen Drehmomentverlauf der Antriebsmotoren derart angepasst, das kein Unterschied vom Fahrer nicht feststellbar ist, ob alleine das elektrohydraulische Bremssystem oder zusammen mit Rekuperationsbetrieb im Einsatz ist.

Bei Fehler FI, bei dem ein Ausfall von einem 3-Phasen-System des Antriebes der Druckversorgungseinrichtung DV vorliegt, kann die Druckversorgungseinrichtung über das zweite 3-Phasen-System noch immer einen Bremsdruck aufbauen und den ABS-Regelbetrieb beherrschen. Die AV- Ventile können hier verstärkt zur Druckabbauregelung eingesetzt werden, um spürbare Leistungseinbussen in der ABS-Regelung zu vermeiden. Elektrische Antriebsmotoren werden zur Bremsmomentsteigerung eingesetzt, weil die Druckversorgung nur noch den halben Druck als im Normalzustand liefern kann. Bei starken E-Motoren kann damit der Radblockierdruck sicher erreicht werden.

Bei Fehler F2 ist keine Druckversorgung mittels der Druckversorgungseinrichtung DV mehr möglich. In diesem Fall wird zur Verzögerung des Fahrzeugs die Betätigungseinrichtung genutzt, mittels derer ein Bremsdruck für die Radbremsen aufbaubar ist. Zusätzlich können die Traktionsmotoren zum Bremsen des Fahrzeuges genutzt werden. Auch die hydraulisch unterstützt elektromechanischen Bremsen H-EMB bzw. die rein elektromechanischen Bremsen EMB können eine Bremskraft zur Verzögerung des Fahrzeuges liefern.

Bei Fehler 3 ist lediglich der Drucksensor DG ausgefallen, wobei dann noch immer über den gemessenen Motorstrom der Druckversorgungseinrichtung und Wegsteuerung mittels der Druck-Volumen-Kennlinie eine Druckregelung möglich ist, die durch Temperaturmessung weiter verbessert werden kann. Auch die Diagnosefunktionen können bei diesem Fehlerfall weiter ausgeführt werden.

Bei Fehler 4 kommt es durch Umwelteinflüsse (z.B. Luftblasen) und Verschleiß zu einem Nachförderbedarf an Bremsflüssigkeit in die Bremskreise, was jederzeit problemlos mittels der Druckversorgungseinrichtung durchgeführt werden kann und sich nicht auf das Pedalgefühl auswirkt.

In Tabelle 2 sind für die Bremse bzw. verschiedenen fahrdynamischen Regelfunktionen (elektrische Bremskraftverstärkung e-BKV, ABS-Betrieb, Lenkung/Torque Vektoring, Stabilitätsregelung/ESP, Rekuperation und Parkbremse) die durch die Komponenten Druckversorgung DV1, Antriebsmotor TM1, TM2, Lenkung EPS und hydraulische unterstützte H-EMB bzw.

Parkbremse EPB abgebildet werden können. Dabei ist die primäre Funktion sowie die Sekundärfunktion/Redundanz gekennzeichnet. Hiermit wird verdeutlicht, dass die wichtigsten Fahrdynamikfunktionen bei der Erfindung mindestens 2-fach redundant vorhanden sind und das System sich somit für Stufe 3 (HAD) und sogar Stufe 4 (FAD) eignet.

Das Bremssystem kann auch derart vereinfacht werden, dass ein sehr kostengünstiges System mit geringeren Redundanzanforderungen und sinnvoller Kombination der primären Versorungseinrichtung mit den Bremsaggregate, z.B. für BRIC-Staaten wie Indien, Brasilien, China aus dem System abgeleitet wird. Hier wird auf die Redundanz der Druckversorgereinrichtung mit redundanten ECU bsp. 2x3 Phasen verzichtet und es wird die hydraulische Rückfallebene über Druckerzeugung des Fahrers über die Betätigungseinheit sowie eine Verzögerung durch den Elektromotor TM genutzt. Damit sind auch mit einer einfachen Betätigungseinheit mit einem Kolben (HZ) die aktuell gesetzlichen Vorschriften der Bremsverzögerung bis 0,3-0, 5g für autonomes Fahren der Stufen 1 bis 2 erreichbar. Zudem kann beispielsweise auf den Druckgeber verzichtet und ausschließlich nach dem PPC-Verfahren geregelt werden. Damit können die Fehlerfälle FI und F3 nicht mehr auftreten. Eine elektrische Parkierbremse kann ebenfalls entfallen, wenn eine H-EMB eingesetzt wird, beziehungsweise eine hydraulisch unterstützte Parkbremse gemäß DE 10 2007 015809 eingesetzt wird und der Druck in der Parkbremse mit einem Magnetventil eingesperrt wird.

### Bei Ausfall der

Hydraulikleitung bzw. Leckage kann dann nachgefördert werden oder über den Traktionsmotor noch ein Haltemoment erzeugt werden.

Auch ein Wegfall der Betätigungseinheit ist denkbar, wenn die Druckversorgung derart zuverlässig produziert wird, dass ein Kolbendichtungsausfall und ein Blockieren des Kugel-Gewindetriebes mit ausreichenden FIT-Raten ausgeschlossen werden kann.

Die erfindungsgemäße Druckversorgungseinrichtung kann auch von einer Rotationspumpe angetrieben sein, welche insbesondere eine Zahnradpumpe sein kann. Sie kann dann ein Motorgehäuse mit darin angeordnetem elektromotorischem Antrieb aufweisen, welcher die Zahnradpumpe antreibt. Der Antrieb hat dafür einen Stator und einen Rotor. Über den Rotor des Antriebs wird ein inneres Zahnrad der Zahnradpumpe bewegt. Der Antrieb ist dabei erfindungsgemäß mittels mindestens einer Dichtung, welche zwischen Rotor und innerem Zahnrad angeordnet ist, als Trockenläufer ausgebildet bzw. weist einen trockenlaufenden Rotor auf, d.h. der Rotor des Antriebs wird nicht von dem von der Zahnradpumpe gefördertem Medium umströmt und/oder ist nicht von dem Medium umgeben. Durch die Ausbildung als Trockenläufer dreht der Rotor ohne größere Reibungs- und Strömungswiderstände, wodurch höhere Drehzahlen und ein besserer Wirkungsgrad erzielbar ist.

Eine besonders kompakte und einfache Druckversorgungseinrichtung ergibt sich, wenn das Motorgehäuse eine Seitenwandung aufweist, an der die Zahnradpumpe angeordnet ist, insbesondere diese eine Ausnehmung aufweist, in der die Zahnradpumpe zumindest teilweise oder ganz einliegt. Die Seitenwandung des Motorgehäuses kann dabei von einer mit dem Rotor drehfest verbundenen Welle durchgriffen sein, wobei das Zahnrad entweder drehfest mit der Welle verbunden ist oder über ein zwischengeschaltetes Getriebe und/oder einer Kupplung mit der Welle gekoppelt ist.

Eine vorteilhafte kompakte und integrierte Ausbildung der zuvor beschriebenen Druckversorgungseinrichtung erhält man, wenn der Anrieb mit seinem Gehäuse an einem Hydraulikgehäuse mit mindestens einem darin angeordneten Ventil und/oder Hydraulikleitungen bzw. -kanälen anliegt oder mit diesem eine Einheit bildet. Die Seitenwandung des Antriebsgehäuses kann dabei an der Seitenwandung des Hydraulikgehäuses anliegen bzw. anstoßen, insbesondere an dieser befestigt sein, wobei die, insbesondere topfförmige, Ausnehmung die Zahnradpumpe zumindest teilweise oder ganz aufnimmt und hin zum Hydraulikgehäuse geöffnet ist. Bei aneinander angeordneten Gehäusen kann die Zahnradpumpe entweder ganz in der Ausnehmung der Wandung des Antriebsgehäuses, ganz in einer Ausnehmung des Hydraulikgehäuses oder aber sowohl in einer Ausnehmung der Seitenwandung des Antriebsgehäuses als auch in einer Ausnehmung der Seitenwandung des Hydraulikgehäuses einliegen. Im letzteren Fall sind die Öffnungen der beiden Ausnehmungen dann zueinander zugewandt. Zusätzliche Dichtungen können dabei vorgesehen sein, um die beiden Gehäuse zueinander und nach außen hin abzudichten.

Die vorbeschriebene Ausnehmung in der Seitenwandung des Antriebsgehäuses ist dabei vorteilhaft nach außen hin, und sofern ein Hydraulikgehäuse vorhanden, zu diesem hin geöffnet. Die Ausnehmung kann selbst vorteilhaft topfförmig ausgebildet sein. Auch kann sie einen zylindrischen im Querschnitt kreisförmigen Abschnitt aufweisen, in dem die Zahnradpumpe mit ihren Zahnrädern einliegt.

Die Seitenwandung des Antriebsgehäuses kann zudem vorteilhaft als Flansch ausgebildet sein, mit dem der Antrieb an einem anderen Teil oder Aggregat befestigbar ist.

Die bei der erfindungsgemäßen Druckversorgungseinrichtung eingesetzte Zahnradpumpe kann eine Innenzahnradpumpe mit Sichel, eine Außenzahn- radpumpe oder Zahnringpumpe sein.

Die Zahnradpumpe kann zudem vorteilhaft axial neben dem Stator und/oder dem Rotor des Antriebs angeordnet sein, ist deren Aufbau und Größe nicht durch die Zahnradpumpe nachteilig beschränkt. Auch ist die Zahnradpumpe dann in ihrer Größe und ihrem Aufbau nicht abhängig von den Abmessungen des Stators und des Rotors.

Das Antriebsgehäuse kann mindestens zweiteilig ausgebildet sein, wobei die Seitenwandung Teil eines ersten Gehäuseteils ist oder dieses bildet. Das zweite Gehäuseteil kann z.B. topfförmig ausgebildet sein und den Stator und den Rotor des Antriebs aufnehmen.

Der Rotor ist, wie bereits ausgeführt, mit dem Zahnrad mittels einer Antriebswelle direkt oder über ein Getriebe und/oder eine Kupplung verbunden. Dabei kann das Zahnrad entweder mittels einer kraftschlüssigen Verbindung oder mittels eines Formschlusses, welcher insbesondere mittels eines Stifts oder Kerbverzahnung gebildet ist, mit der Antriebswelle drehfest verbunden sein. Bei der Zahnringpumpe ist das innere Zahnrad exzentrisch auf einem mit der Antriebswelle verbundenem Teil, insbesondere in Form einer Scheibe oder einer Nockenscheibe, angeordnet.

Sowohl bei der Ausbildung der Zahnradpumpe der erfindungsgemäßen Druckversorgungseinrichtung als Innenzahnradpumpe oder als Zahnringpumpe, ist zu dem inneren Zahnrad auch noch ein äußerer Innenzahnkranz notwendig. Der Innenzahnkranz wird bei der Innenzahnradpumpe mittels des von der Antriebswelle angetriebenen inneren Zahnrades um seine Drehachse verdreht, wobei das innere Zahnrad exzentrisch zu dem Innenzahnkranz angeordnet ist. Der Innenzahnkranz dreht sich dabei in einem äußeren, ihn umgebenden Ring oder Zylinder. Zusätzlich ist noch eine Sichel vorzusehen, welche in dem sich durch die Exzentrizität ergebenden Raum zwischen Innenzahnkranz und innerem Zahnrad angeordnet sein muss.

Im Gegensatz zur Innenzahnradpumpe ist bei der Zahnringpumpe der Innenzahnkranz fest angeordnet, wobei das innere Zahnrad aufgrund seiner exzentrischen Lagerung auf der von der Antriebswelle gedrehten Scheibe in dem In- nenzahnkranz abrollt. Eine Sichel wie bei der Innenzahnradpumpe ist nicht erforderlich.

Die Antriebswelle kann erfindungsgemäß entweder a) im Motorgehäuse einerseits, sowie in der Zahnradpumpe und/oder im Hydraulikgehäuse andererseits oder b) nur in der Zahnradpumpe oder c) im Hydraulikgehäuse und im Motorgehäuse oder d) in der Zahnradpumpe und im Hydraulikgehäuse abgestützt bzw. mittels geeigneter Lager, insbesondere Radiallager, in Form von Kugel- oder Rollenlagern, und/oder Axiallagern, gelagert sein.

Sofern ein Hydraulikgehäuse vorgesehen ist, so kann sich die Antriebswelle bis in das Hydraulikgehäuse hinein erstrecken, insbesondere bis zu dessen dem Antrieb gegenüberliegender Seite. So kann an der Antriebswelle ein Target für einen Sensor angeordnet sein, wobei der Sensor in der Steuer- und Regelein- heit (ECU) angeordnet ist. Dabei können zusätzliche Dichtungen verhindern, dass das geförderte Medium in die Steuer- und Regeleinheit gelangt. Es ist auch möglich, dass sich die Antriebswelle durch das Hydraulikgehäuse ganz hindurch erstreckt und in dem sich daran anschließenden Gehäuse, z.B. einer Steuer- und Regeleinheit, endet. Die Zahnradpumpe als Innenzahnradpumpe kann unterschiedlich ausgebildet sein. So können in einer ersten Ausführung das innere Zahnrad, der Innenzahnkranz, die Sichel und der Außenring zwischen zwei Scheiben angeordnet sein, wobei nach entsprechender Zentrierung und Justierung der Teile zueinander die Scheiben mit dem Außenring stoffschlüssig verbunden werden. Da- bei kann sich die stoffschlüssige Verbindung ganz um den Umfang herum erstrecken, so dass sich eine stabile und kompakte Ausführungsform ergibt, bei der die einzelnen sich bewegenden Teile nur kleine Spiele und Spalte zueinander aufweisen, wodurch ein guter Wirkungsgrad erreicht wird und ein hoher Druck erzielbar ist. Nachfolgend werden mögliche Ausführungsformen des erfindungsgemäßen Bremssystems anhand von Zeichnungen näher erläutert.

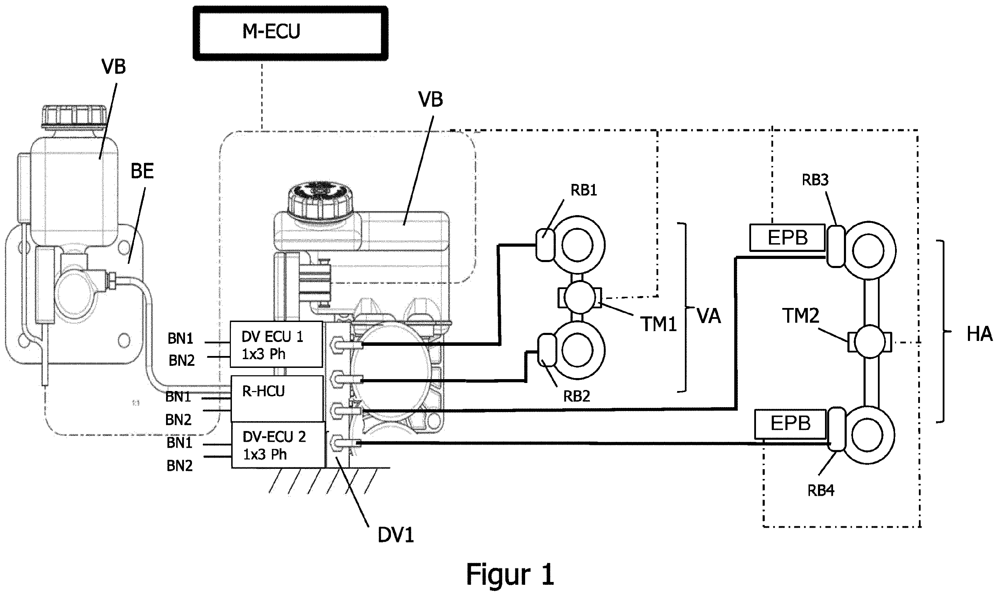

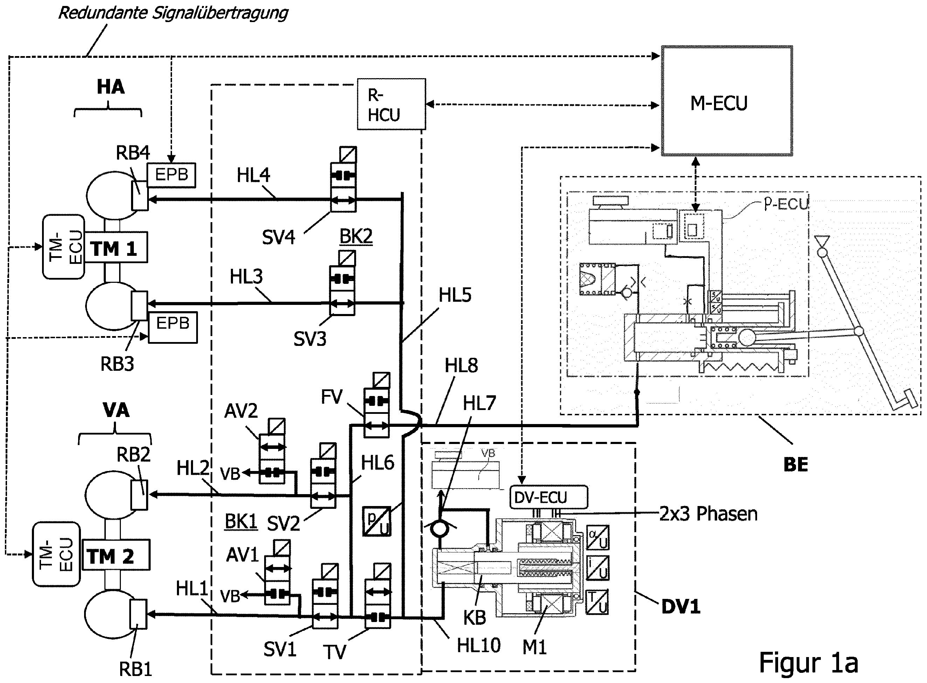

Es zeigen : Fig. 1 : Eine schematische Darstellung einer ersten Ausführungsform des erfinderischen Bremssystems mit einer elektrischen Parkbremse an der Hinterachse, elektrische Antriebsmotoren TM1 und TM2 an Vorder- und Hinterachse sowie eine Druckversorgungseinrichtung mit Magnetventilen, Regel- und Steuereinrichtungen in einer Druckregelmodul-Baueinheit, wobei die Baueinheit mit 4 Radbremsen und einer Betätigungseinheit (BE) hydraulisch verbunden ist,
Fig. Ia: Prinzipschaltbild einer ersten möglichen Ausgestaltung des Bremssystems gemäß Figur 1;
Fig. 2: eine schematische Darstellung einer zweiten möglichen Ausfüh- rungsform des erfinderischen Bremssystems mit dem Unterschied zum Bremssystem gemäß Figur 1, dass an der Hinterachse hydraulisch unterstützte elektromechanische Bremsen angeordnet sind;
Fig. 2a: Prinzipschaltbild des Bremssystems gemäß Figur 2;
Fig. 3: eine schematische Darstellung einer dritten möglichen Ausfüh- rungsform des erfinderischen Bremssystems mit einer Druckversorgungseinrichtung für die Vorderachse, wobei an der Hinterachse pro Rad eine elektromechanische Bremse vorgesehen ist;
Fig. 3a: Prinzipschaltbild des Bremssystems gemäß Figur 3;
Fig. 4a: Querschnittsdarstellung durch eine hydraulisch unterstützte elekt- romechanische Bremse;
Fig. 4b: Prinzipschaltbild möglicher Ventilschaltungen und deren Funktion zum Druckabbau in einer Radbremse; Fig. 4c: Betätigungseinrichtung mit zugehöriger Kolben-Zylinder-Einheit zum Druckaufbau in einem Bremskreis;
Fig. 5: Druckversorgungseinrichtung mit zwei Steuer- und Regeleinrichtungen; Fig. 6a: Momentendiagramme zur Darstellung der Bremskraftunterstützung mittels hydraulisch unterstützter elektromechanischer Bremse und Traktionsmotor;
Fig. 6b: Momentendiagramme zur Darstellung der Downsizing-Möglichkeit der Druckversorgungseinrichtung, sofern eine Bremskraftunterstützung mittels hydraulisch unterstützter elektromechanischer Bremse und Traktionsmotor erfolgt;
Fig. 6c: Momentendiagramme zur Darstellung der Bremskraftunterstützung mittels hydraulisch unterstützter elektromechanischer Bremse und Traktionsmotor im Notbetrieb bei Ausfall von Komponenten des Bremssystems;
Fig. 6d : Momentendiagramme zur Darstellung des Bremsmomentenverlaufs während des Nachforderns von Bremsfluid mit der Bremskraftunterstützung mittels hydraulisch unterstützter elektromechanischer Bremse und Traktionsmotor; Fig. 6e: Bremsdruckregelung bei Ausfall des Druckgebers mittels Strommessung und Auswertung der Druck-Volumen-Kennlinie;

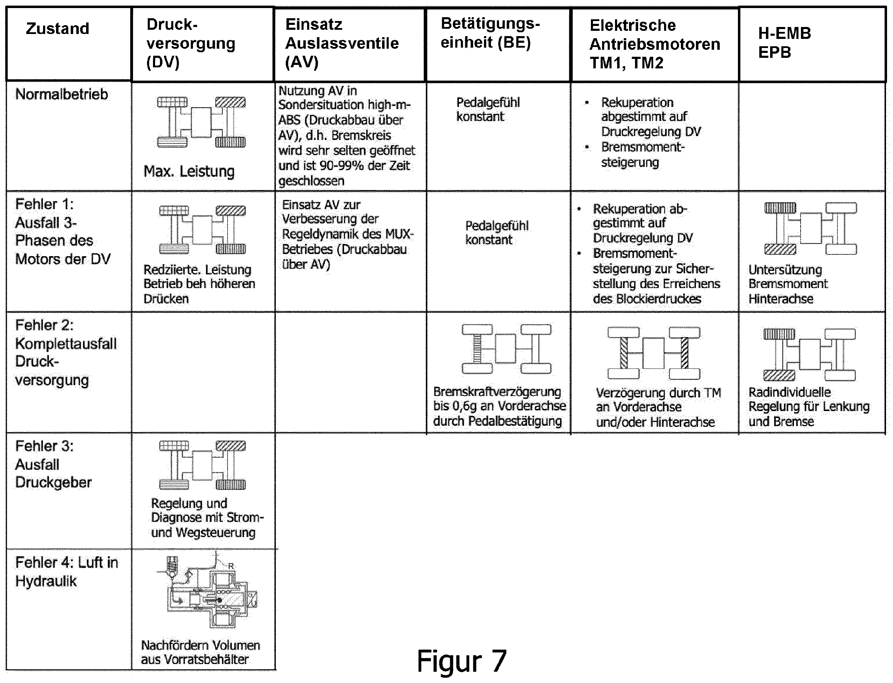

Fig. 7: Tabelle 1 : Auswirkung von wichtigen Fehlern auf die Betriebsstrategie;

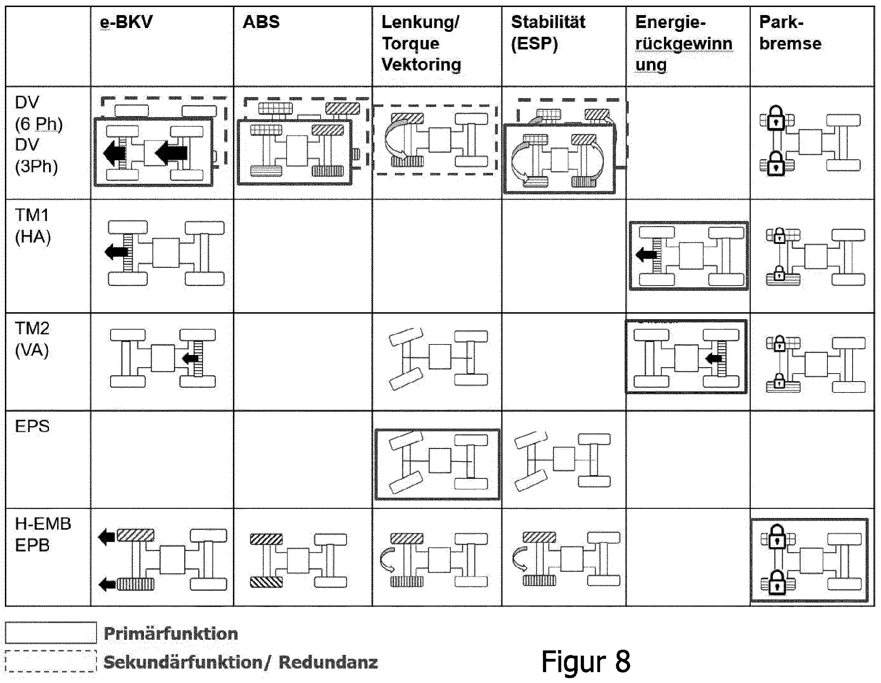

Fig. 8: Tabelle 2: Primärfunktion und Sekundärfunktion/ Redundanz; Fig. 9a: Baueinheit bestehend aus Elektromotor 22, einkreisiger Rotationspumpe Z, HCU mit Magnetventilen und ECU

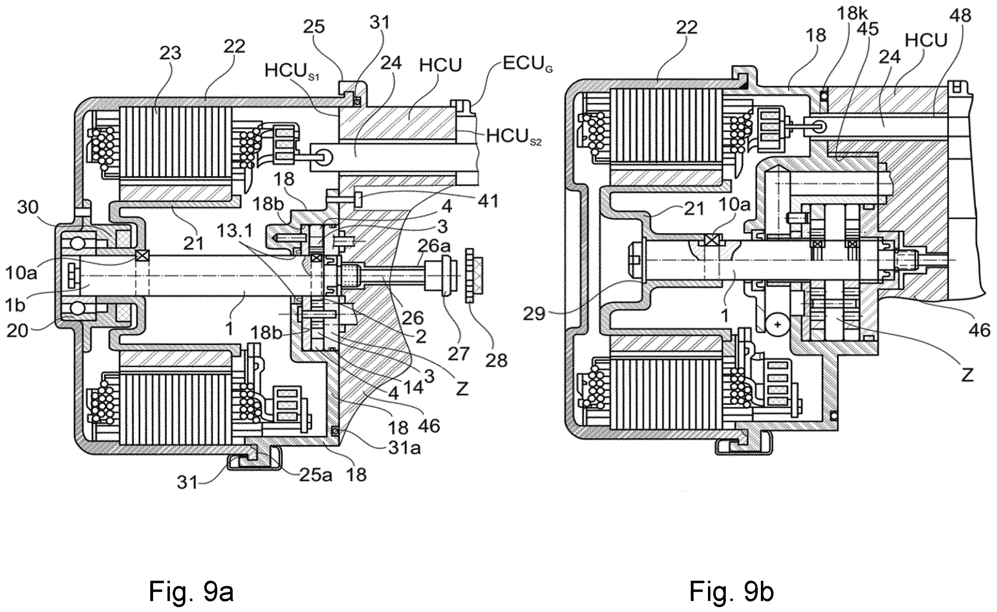

Fig. 9b: Baueinheit bestehend aus Elektromotor 22, zweikreisiger Rotationspumpe Z, HCU mit Magnetventilen und ECUT Die Figur 1 zeigt eine erste mögliche Ausführungsform des erfindungsgemäßen Bremssystems mit einer Druckversorgungseinrichtung DV1, einer Betätigungseinrichtung BE, einer übergeordneten Steuer- und Regeleinheit M-ECU, sowie zwei an der Vorderachse VA angeordneten Radbremsen RB1 und RB2, sowie einer Hinterachse HA an der ebenfalls zwei Radbremsen RB3 und RB4 sowie zusätzlich elektrische Parkbremsen EPB angeordnet sind. Sowohl an der Vorder- als auch der Hinterachse ist jeweils ein Traktionsmotor TM1 und TM2 angeordnet. Die Druckversorgungseinrichtung DV1 verfügt über zwei voneinander unabhängige Steuer- und Regeleinheiten DV-ECU1 und DV-ECU2, die jeweils die Ansteuerung von jeweils einem der beiden Wicklungs- bzw. Phasensysteme des Antriebsmotors der Druckversorgungseinrichtung DV1, welche hier durch 3-Phasensysteme gebildet sind, ansteuern. Zusätzlich können redundante Signalleitungen DS1 und DS2 vorgesehen werden.

Die Druckversorgungseinrichtung DV1 verfügt zudem über eine Ventileinrichtung R-HCU in der Schaltventile zum Verbinden bzw. Trennen der Druckversorgungseinrichtung DV1 mit den Radbremsen vorgesehen sind. Die gestrichelten Linien stellen Signalübertragungsleitungen dar, welche die Steuereinheit M-ECU mit den Komponenten des Bremssystems verbinden.

Die Figur Ia zeigt ein Prinzipschaltbild einer ersten möglichen Ausgestaltung des Bremssystems gemäß Figur 1. Das Fahrzeug weist eine Vorderachse VA sowie eine Hinterachse HA auf. An der Vorderachse ist an jedem Rad jeweils eine konventionelle hydraulische Radbremse RB1, RB2 angeordnet. Zusätzlich ist an der Vorderachse VA noch ein Traktionsmotor TM 1 zusammen mit seiner Steuereinheit TM-ECU angeordnet, wobei der Traktionsmotor TM1 sowohl zum Antrieb als auch zum Abbremsen der Vorderachse VA eingesetzt werden kann.

An der Hinterachse HA sind an jedem Rad sowohl eine konventionelle hydraulisch wirkende Radbremse RB3, RB4 sowie jeweils eine elektrische Parkbremse EKB angeordnet. Auch an der Hinterachse HA ist ein Traktionsmotor TM2 mit zugehöriger Steuerelektronik TM-ECU angeordnet, welcher ebenfalls wie der Traktionsmotor TM1 an der Vorderachse VA sowohl zum Antrieb als auch zum Abbremsen der Hinterachse HA eingesetzt werden kann. Zum Druckaufbau in den hydraulisch wirkenden Radbremsen RB1-RB4 dient eine Druckversorgungseinrichtung DV1, die einen elektromotorischen Antrieb MI aufweist, welcher von der Steuer- und Regeleinrichtung DV-ECU gesteuert wird. Zusätzlich kann die Druckversorgungseinrichtung DV1 noch über ein Mo- torstrom-Meßeinrichtung i/U, mindestens einen Temperatursensor T/U sowie eine Rotor-Winkelgeber a/U aufweisen, deren Signale zur Druckregelung verwendet werden können. Der Motor MI treibt über einen Spindeltrieb einen Kolben KB, welcher in einem Zylinder der Druckversorgungseinrichtung DV1 verschieblich gelagert ist und einen Druckraum begrenzt, an, um dort einen Druck aufzubauen, zu halten oder abzubauen. Der Druckraum ist über die Hydraulikleitung HL10 mit einem Trennventil TV sowie einer Hydraulikleitung HL5 in Verbindung. Mittels des Druckgebers p/U kann der Druck in der Hydraulikleitung HL5 bzw. HL10 ermittelt werden. Die Druckregelung kann entweder unter Zuhilfenahme des Druckgebers p/U erfolgen. Die Druckregelung kann aber auch über die Strommessung mittels der Motorstrom-Meßeinrichtung i/U sowie dem Winkelgeber a/U und einer abgespeicherten Druck-Volumen-Kennlinie erfolgen, da das Motormoment proportional zum Druck im Druckraum und auch proportional zum Motorstrom i ist. Der Motor MI verfügt über zwei voneinander getrennte Wicklungssysteme mit 2x3- Phasen. Selbstverständlich kann die Zahl der Phasen den jeweiligen Anforderungen nach geändert werden. Bei Ausfall eines Wicklungssystems kann der Motor MI noch mit verminderter Leistung betrieben werden. Hierdurch ist bereits eine wesentliche Redundanz geschaffen. Die Steuer- und Regeleinrichtung DV-ECU kann ebenfalls redundant ausgebildet werden, so dass z.B. jeweils eine eigenständige Steuer- und Regeleinrichtung DV-ECU1 und DV-ECU2 vorgesehen sein kann, welche jeweils ein Phasensystem des Motors MI ansteuert. Somit kann auch bei Ausfall einer Steuer- und Regeleinrichtung DV- ECU 1 bzw. DV-ECU2 das Bremssystem noch sicher betrieben werden.

Mittels eines Trennventils TV kann die Druckversorgungseinrichtung DV1 wahlweise mit der Hydraulikleitung HL6 bzw. dem ersten Bremskreis BK1 verbunden bzw. von dieser getrennt werden. Mittels Schaltventilen SV1 und SV2 sind die Hydraulikleitungen HL1 und HL2, welche mit den Radbremsen verbunden sind, wahlweise mit der Hydraulikleitung HL6 verbindbar. Soll nun ein Druck in der Radbremse RB1 der Vorderachse VA aufgebaut werden, so erfolgt dies über geöffnete Ventile TV und SV1 wobei die Ventile AVI, SV2 und FV ge schlossen sind und der Kolben KB mittels des Motors MI verstellt wird. Zum Druckabbau in der Radbremse RB1 kann der Kolben KB bei gleicher Ventil schaltung zurückgefahren werden oder aber das Auslassventil AVI wird geöff net, wodurch sich der Druck in der Radbremse RB1 in den Vorratsbehälter VB abbauen kann. Der Druckaufbau in der Radbremse RB2 erfolgt analog. Selbst verständlich kann der Druck in den Radbremsen RB1 und RB2 auch simultan aufgebaut und abgebaut werden. Auch ist ein Druckaufbau in der einen Rad bremse mittels der Druckversorgungseinrichtung DV1 und gleichzeitig ein Druckabbau in der anderen Radbremse über das zugehörige Auslassventil AV möglich. Bei alleinigem Druckaufbau in den Radbremsen RB3 und RB4 des zweiten Bremskreises BK2 muss entweder das Trennventil TV und/oder die Schaltventile SV1 und SV2 geschlossen und das jeweilige Schaltventil SV3 bzw. SV3 geöffnet sein. Sollte die Druckversorgungseinrichtung DV1 ausfallen, so kann mittels der Betätigungseinrichtung BE ein Druck in einem oder beiden Bremskreisen aufgebaut werden. Hierfür weist die Betätigungseinrichtung BE ein Bremspedal auf, welches auf einen Druckraum begrenzenden Kolben wirkt, wobei durch den Kolben dann aus dem Druckraum Hydraulikmedium in den bzw. die Bremskreise gedrückt wird, wodurch ein Bremsdruck in einer oder allen Radbremsen aufgebaut wird. Hierfür sind die Schaltventile vorzugsweise als Stromlos-Offene-Ventile ausgebildet.

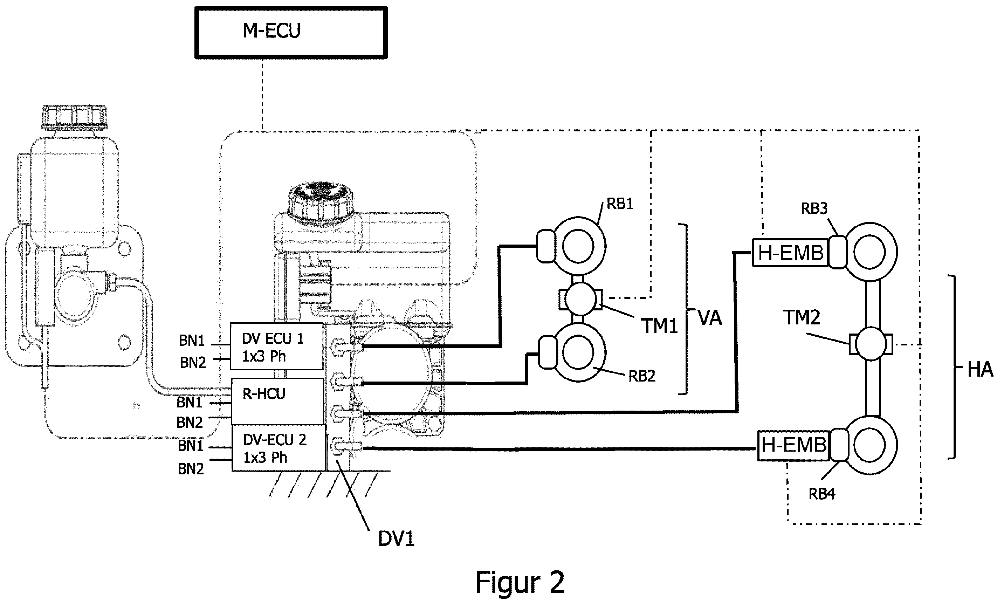

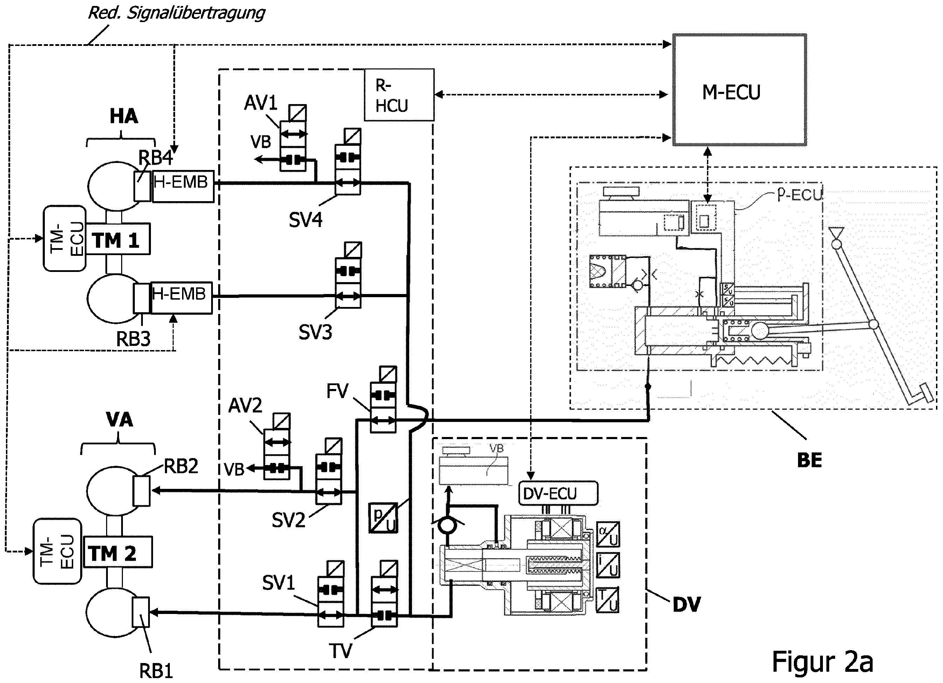

An den Rädern der Hinterachse sind zudem elektromechanische Bremsen EMB angeordnet, mittels derer über deren Antrieb ein Bremsmoment aufbaubar ist, welches unterstützend oder als Ersatz zur Druckregelung verwendet werden kann. Auch kann mittels der Traktionsmotoren TM1 und TM2 ein Bremsmo ment auf die Achsen VA und HA aufgebracht werden. Dieses kann ebenfalls unterstützend bei hoher geforderter Dynamik wirken oder als Ersatz oder Er gänzung bei Totalausfall oder Teilausfall der Druckregelung mittels der Druck versorgungseinrichtung DV1. Eine übergeordnete Steuer- und Regeleinrich tung M-ECU steuert dabei die einzelnen Komponentensteuerungen TM-ECU, DV-ECU und R-HCU (Ventilsteuerung) Die Figur 2 zeigt eine schematische Darstellung einer zweiten möglichen Ausführungsform des erfinderischen Bremssystems mit dem Unterschied zum Bremssystem gemäß Figur 1, dass an der Hinterachse anstatt zusätzlicher elektromechanischer Bremsen hydraulisch unterstützte elektromechanische Bremsen angeordnet sind. Sofern die hydraulisch unterstützten elektromechanischen Bremsen H-EMB entsprechend ausgebildet sind, kann auch gegebenenfalls auf den Einsatz der konventionellen Radbremsen RB3 und RB4 verzichtet werden. Der Druck in den hydraulisch unterstützten Bremsen H-EMB wird von der Druckversorgungseinrichtung DV1 eingeregelt.

Die Figur 2a zeigt das Prinzipschaltbild des Bremssystems gemäß Figur 2. Dieses unterscheidet sich nur in wenigen Punkten von dem in Figur Ia. So ist z.B. hier ein Auslassventil AV pro Bremskreis vorgesehen. Ansonsten erfolgt die Regelung und Steuerung des Bremssystems analog zu dem in Figur Ia gezeigten und beschriebenen. Es wird daher insoweit auf die Figur Ia und ihre Beschreibung verwiesen.

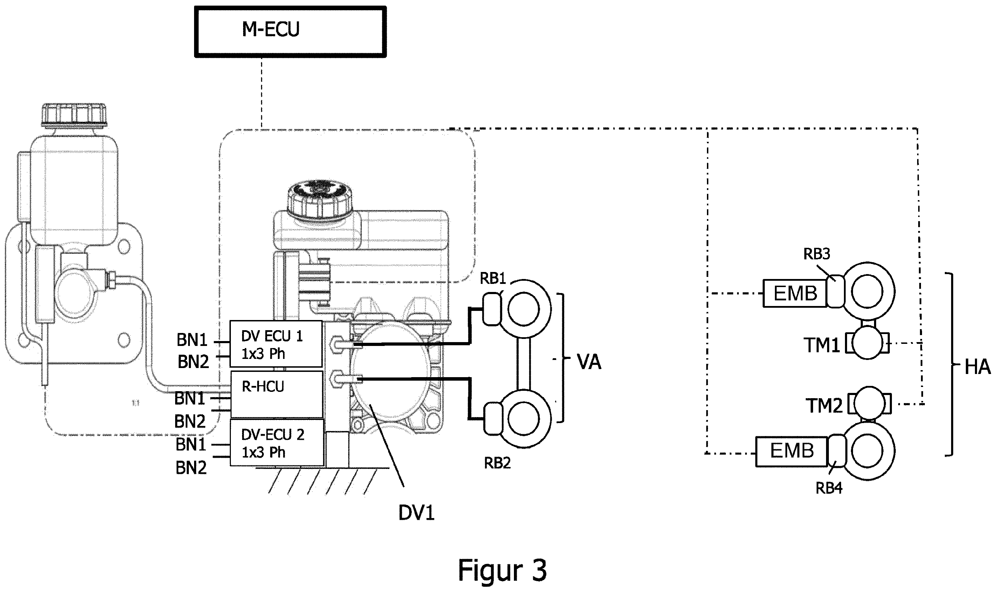

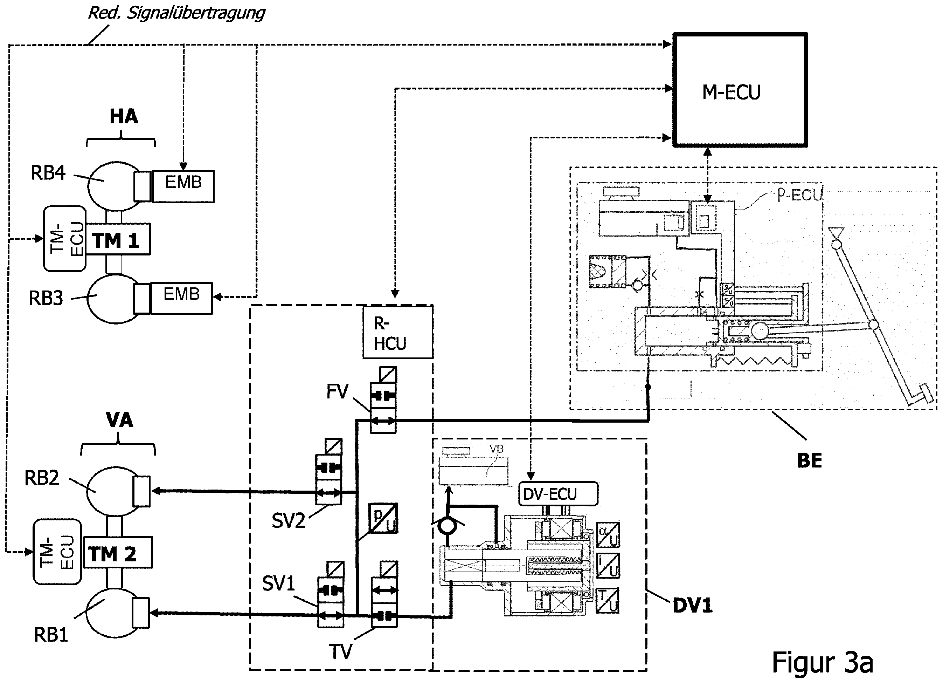

Die Figur 3 zeigt eine schematische Darstellung einer dritten möglichen Ausführungsform des erfinderischen Bremssystems mit einer Druckversorgungseinrichtung DV1 für die Vorderachse VA, wobei an der Hinterachse HA pro Rad jeweils nur eine elektromechanische Bremse EMB als Radbremse RB3 und RB4 vorgesehen ist und jedes Hinterrad über einen eigenen Traktionsmotor TM 1, TM2 angetrieben und auch abgebremst werden kann. Auch hier sind wieder zwei getrennte Steuer- und Regeleinrichtungen DV-ECU1 und DV-ECU2 vorgesehen, welche jeweils getrennte Wicklungssysteme (Ix3PH) des Antriebsmotors der Druckversorgungseinrichtung DV1 ansteuern. Zusätzlich oder alternativ kann eine redundante Stromversorgung für die Steuer- und Regeleinrichtungen und/oder die Ventilsteuerung R-HCU vorgesehen werden. So können diese wie dargestellt beispielsweise an zwei unterschiedliche Bordnetze BN1 und BN2 angeschlossen sein, so dass bei Ausfall eines Bordnetzes eine Stromversorgung noch über das andere Bordnetz BN sichergestellt ist.

Die Figur 3a zeigt das Prinzipschaltbild des Bremssystems gemäß Figur 3. Bei diesem System kann auf Auslassventile AV verzichtet werden, da der Druckabbau auch schnell über die stromlos-offenen Ventile SV1, SV2 und TV durch den Druckraum der Druckversorgungseinrichtung DV1 hin zum Vorratsbehält nis VB erfolgen kann.

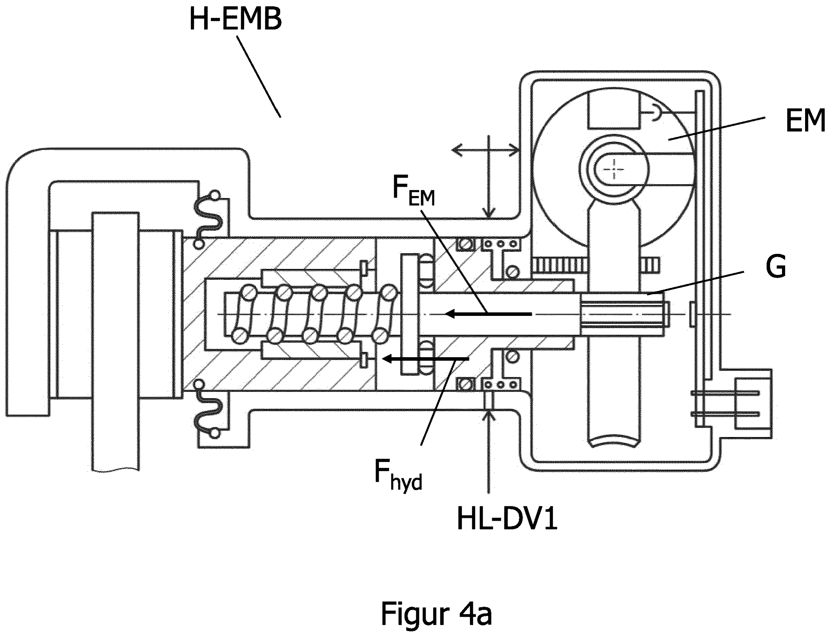

Die Figur 4a zeigt eine Querschnittsdarstellung durch eine hydraulisch unter stützte elektromechanische Bremse H-EMB, welche über einen Hydraulikan schluss HL-DV1 mit der Druckversorgungseinrichtung DV1 verbindbar ist, so dass entweder über die Hydraulik und/oder den Elektromotor EM eine Kraft auf die Bremsscheiben aufbringbar ist. Die rotatorische Bewegung des Elekt romotors wird hierbei über ein Getriebe G in eine lineare Bewegung übertra gen und erzeugt die Kraft FEM auf die Radbremse. Das Getriebe G ist vorzugs weise selbsthemmend ausgeführt, so dass im Stillstand bei Ausfall des Bord netzes die Parkbremse sicher funktioniert. Zusätzlich zum Elektromotor wird über die Druckversorgung eine hydraulische Kraft Fhyderzeugt. Je nach Aus führung des EM als Bürstenmotor oder bürstenloser Motor mit geringer oder höherer Leistung, kann die Dynamik der Bremsmomentänderung und das zu sätzlich verfügbare Bremsmoment durch die H-EMB durch entsprechende Ge staltung der Komponenten festgelegt werden und auf die hydraulische Bremse abgestimmt werden.

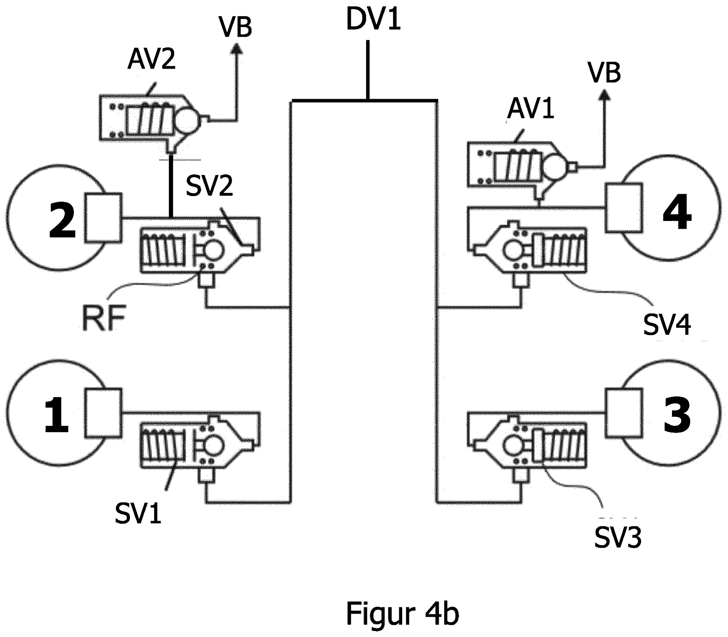

Die Figur 4b zeigt eine mögliche Ventilschaltung und deren Funktion zur Druckregelung in den vier Radbremsen RB1 bis RB4 entsprechend der Ventil schaltung von Figur 2a. Dabei erfolgt der Druckaufbau und Druckabbau in den Radbremsen RB1 und RB3 über die Druckversorgungseinrichtung DV1 bei je weils geöffneten Schaltventilen SV1 bzw. SV3 mit Druck als Regelgröße vor zugsweise unterstützt mit dem PPC-Verfahren, z.B. durch geeignete Vorsteue rung, bzw. bei Nichtverfügbarkeit eines Druckgebers ausschließlich durch das PPC-Verfahren, Der Druckaufbau in den Radbremsen RB2 und RB4 erfolgt ebenfalls bei jeweils geöffnetem Schaltventil SV2 bzw. SV4 über die Druckver sorgungseinrichtung DV1 vorzugsweise ebenfalls mit dem PPC-Verfahren, wo bei der Druckabbau in diesen Radbremsen alternativ über die zugeordneten Auslassventile AVI, AV2 in das Vorratsbehältnis VB oder über das geöffnete Schaltventil SV2 bzw. SV4 im PPC-Verfahren erfolgt. Somit ist auch ein Druck aufbau in den Radbremsen möglich wobei gleichzeitig ein Druckabbau in einer Radbremse RB2 bzw. RB4 über das zugehörige Auslassventil AVI bzw. AV2 erfolgt. Auch ist eine Kombination des PPC-Verfahrens mit der PWM-Steuerung ein mögliches Steuerverfahren. Hierbei sind die Schaltventile SV2 und SV4 oder nur ein Schaltventil SV2 bzw. SV4 geöffnet bzw. ein Schaltventil oder beide Schaltventile werden im PWM-Verfahren getaktet und Auslassventil AVI und/oder AB2 ist entweder geöffnet oder wird ebenfalls getaktet. Dieses Ver fahren ist eine Alternative zum bekannten Multiplex-Verfahren, wo Schaltven tile digital geöffnet oder geschlossen werden und der Druckabbau sequentiell oder simultan erfolgt und baut auf dem Verfahren in DE 102015103858 auf.

Die Auslassventile AVI und AV2 können auch anderes positioniert werden wie in Figur Ia zu den Radbremsen einer Achse bzw. einem Bremskreis zugeord net sein. Die Regelung erfolgt analog wie oben beschrieben.

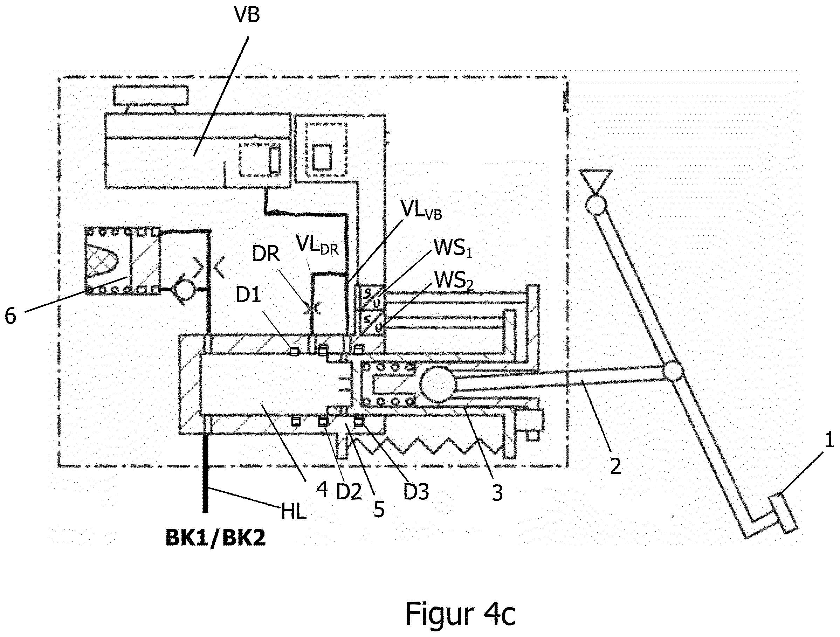

Die Figur 4c zeigt eine Ausführungsform einer Betätigungseinrichtung BE mit Bremspedal 1, Stößel 2, Kolben 3, Zylinder 5 und Pedalgefühlsimulator 6 zum Druckaufbau in einem oder mehreren Bremskreis(en) BK1 und/oder BK2. Der Kolben 3, der 3 Dichtungen x im Zylinder 5 aufweist wird über den Stößel 2 vom Bremspedal 1 nach links verstellt, wodurch im Druckraum 4 ein Druck aufgebaut bzw. ein Druckvolumen über die Hydraulikleitung HL in die Brems kreise BK1/BK2 gefördert wird. Zusätzlich sind noch redundante Dichtungen im Zylinder sowie jeweils parallele hydraulische Leitungen zum Vorratsbehälter jeweils zwischen den Dichtungen vorgesehen, wobei eine Dichtung eine Dros sel aufweist. Damit kann sicher der Ausfall von einer Dichtung sicher diagnos tiziert werden und es steht eine zuverlässige Betätigungssystem mit Pedalge fühlsimulator und Dichtungssystem mit Mehrfachredundanz sowie Druckerzeu gungsmöglichkeit bei Ausfall der elektromotorischen Druckversorgungseinrich tung zur Verfügung.

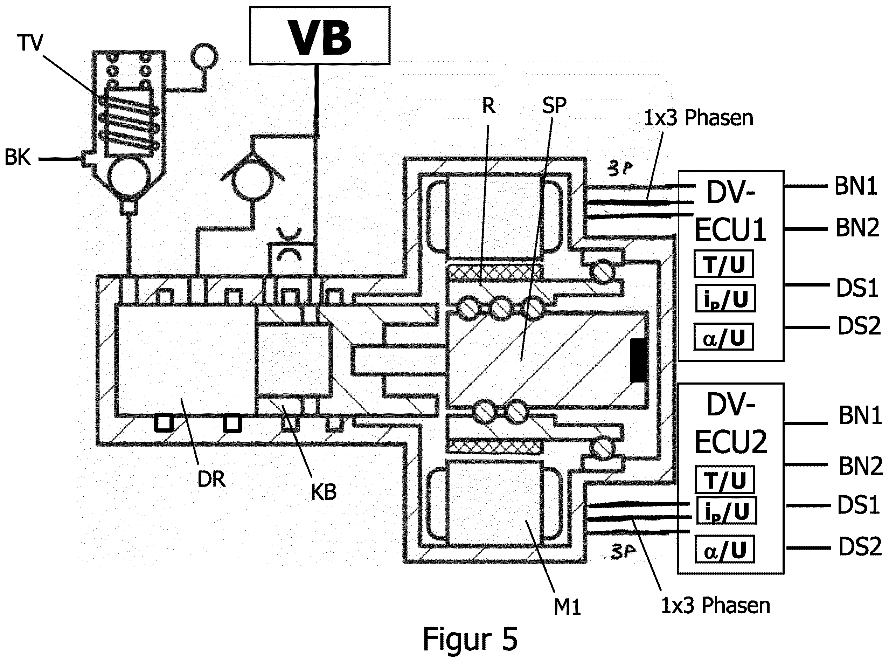

Die Figur 5 zeigt eine mögliche Ausführungsform einer Druckversorgungsein richtung DV1 mit zwei Steuer- und Regeleinrichtungen DV-ECU1 und DV- ECU2. Die Druckversorgungseinrichtung weist einen Elektromotor MI auf, des sen Rotor R eine Spindel SP verstellt, welche mit einem Kolben KB in Verbin dung ist. Durch das Verstellen des Kolbens KB kann ein Druck im Druckraum DR aufgebaut werden, welche über das Trennventil TV in einen Bremskreis BK geleitet werden kann. Der Kolben ist über mehrere Dichtungen im Zylinder abgedichtet, wobei wie bei der Betätigungseinheit BE ein redundantes diag nostizierbares Dichtungssystem geschaffen wird. Auch bei der Druckversor- gungseinrichtung führt zwischen den Dichtungen je eine Hydraulikleitung zum Vorratsbehälter. Somit ist die Druckversorgung auch bei Ausfall einer Dichtung noch voll betriebsfähig und redundant. Über ein Rückschlagventil ist der Druckraum DR mit dem Vorratsbehälter verbunden. Somit kann die Druckversorgung nachfördern. Jede der beiden Steuer- und Regeleinrichtungen DV- ECU1 und DV-ECU2 sind über 1x3 Phasenleitungen mit jeweils getrennten Wicklungs- bzw. Phasensystemen des Motors MI in Verbindung, so dass bei Ausfall einer Steuer- und Regelungseinrichtung bzw. eines Wicklungssystem der Motor MI noch über das andere Wicklungs- bzw. Phasensystem und die andere Steuer- und Regeleinrichtung betrieben werden kann, auch wenn dann nur noch ca. das halbe Drehmoment mittels des Antriebes MI erzeugbar ist. Eine oder beide Steuer- und Regeleinrichtung(en) weist bzw. weisen Sensoren zur Ermittlung der Temperatur T, des Motorstroms i sowie des Rotorwinkels des Elektromotors a auf. Zur Erzielung einer hohen Verfügbarkeit sind die nicht nur Steuer- und Regeleinrichtungen DV-ECU redundant ausgebildet, sondern auch Stromversorgungen BN1, BN2 sowie Daten- und Steuerleitungen DS1 und DS2 doppelt vorgesehen. Die Stromversorgungen BN1 und BN2 können z.B. unterschiedliche Spannungsniveaus eines Bordnetzes oder getrennte Bordnetze sein.

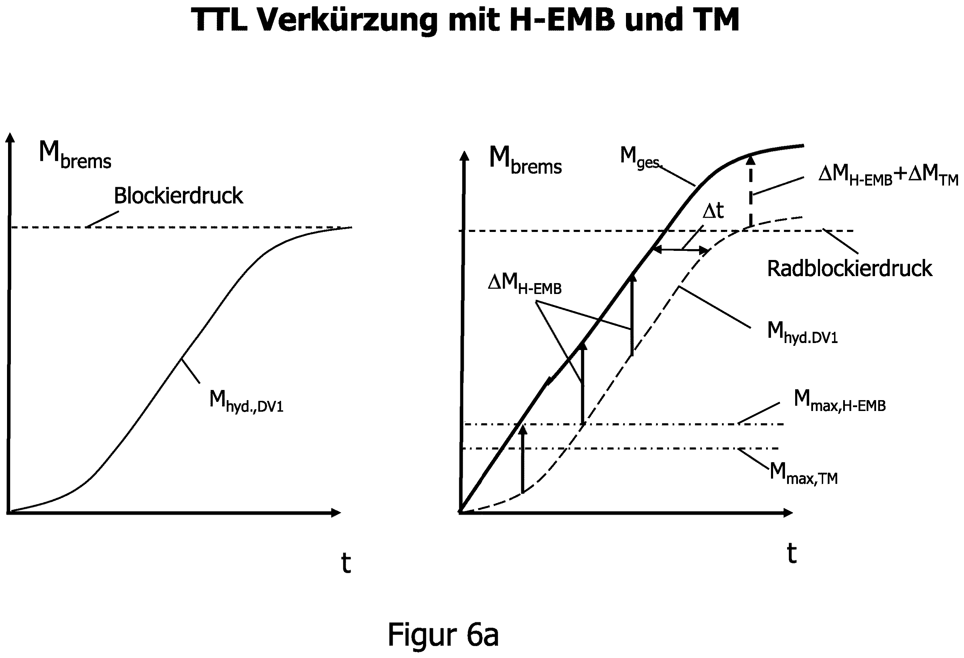

Die Figur 6a zeigt Momentendiagramme zur Darstellung der Bremskraftunterstützung mittels hydraulisch unterstützter elektromechanischer Bremse H-EMB und Traktionsmotor TM. Im linken Diagramm ist der Momentenverlauf Mhyd.Dvi, welcher allein mittels der Druckversorgungseinrichtung DV1 erzielbar ist, dargestellt. Im rechten Diagramm ist der Momentenverlauf dargestellt, wie mittels Hinzunahme der hydraulisch unterstützten elektromechanischen Bremse H-EMB und eines Traktionsmotors TM erzielbar ist. Es steht ein maximales Drehmoment Mmax, H-EMB von H-EMB bzw. Mmax/m des Traktionsmotors zur Verfügung. Durch das zusätzlich durch Traktionsmotor TM erzeugt Bremsmoment M max,TM sowie das mittels der H-EMB erzeugte Bremsmoment DMH-EMB wird der Blockierdruck (horizontale gestrichelte Linie) um die Zeitspanne At eher erreicht. Auch kann ein deutlich größeres Bremsmoment erzeugt werden.

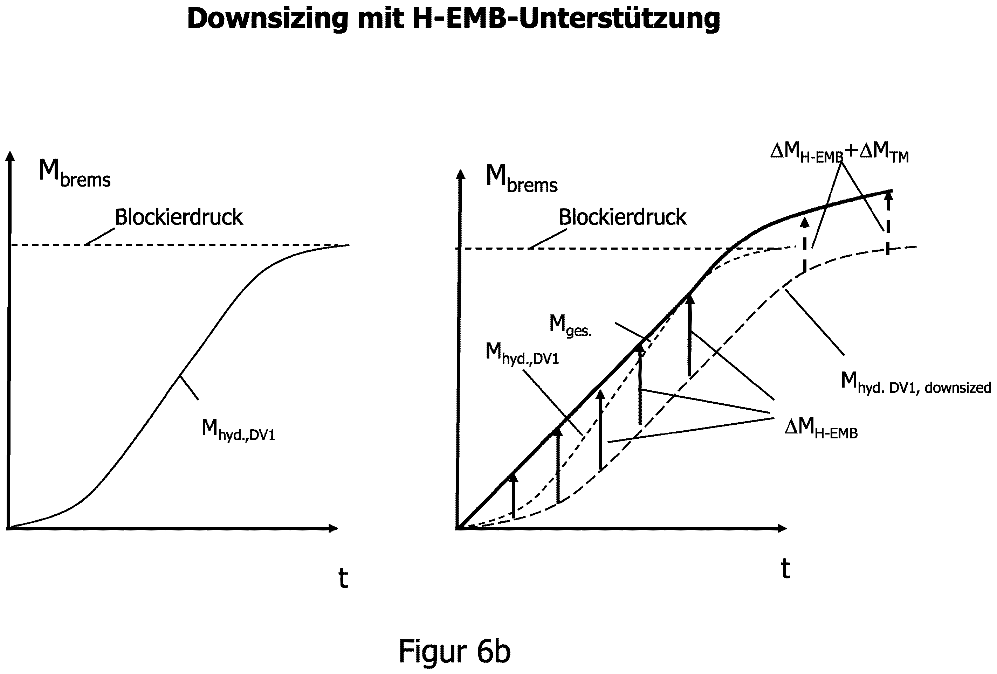

Die Figur 6b zeigt die Möglichkeit des Downsizings der Druckversorgungseinrichtung DV1 auf, sofern die Bremswirkung der hydraulisch unterstützten Bremse (H-EMB) gemäß Figur 4a bei der Druckregelung mit einbezogen wird. So sollte die Druckversorgungseinrichtung DV1 nicht hinsichtlich ihres maximal aufbaubaren Druckes reduziert werden, sondern hinsichtlich ihrer Dynamik, womit der Elektromotor günstiger herstellbar ist.

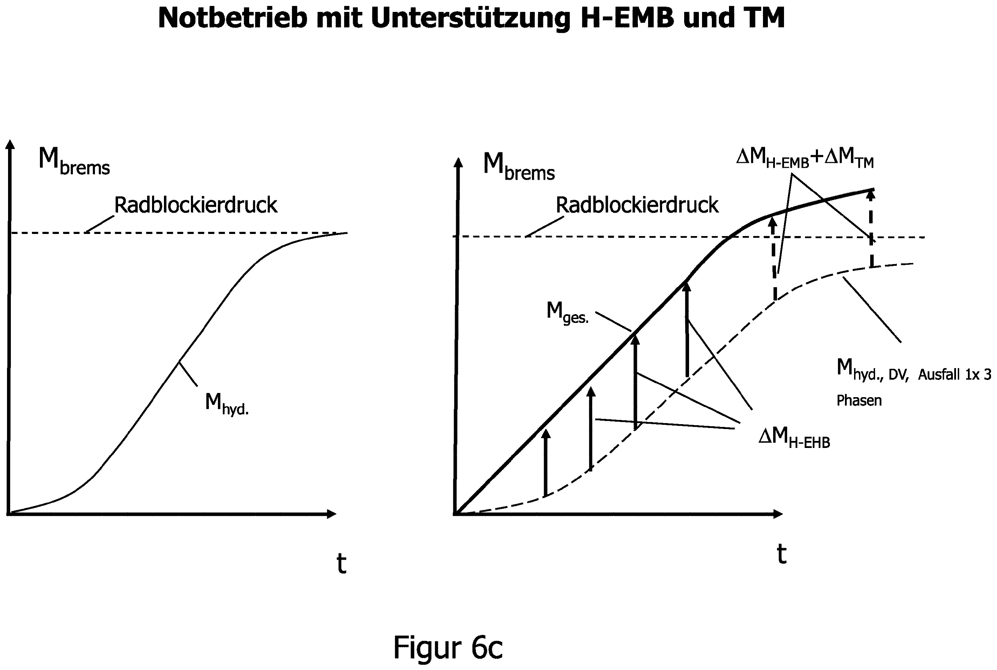

Die Figur 6c zeigt Momentendiagramme zur Darstellung der Bremskraftunterstützung mittels hydraulisch unterstützter elektromechanischer Bremse H-EMB und Traktionsmotor TM im Notbetrieb bei Ausfall eines Wicklungs- bzw. Phasensystems 1x3 Phasen des Antriebs MI. Durch den Wegfall eines Wicklungssystems kann die Druckversorgung DV1 nicht mehr den erforderlichen Druckaufbau bis zum Blockierdruck aufbauen und ist auch nicht mehr dynamisch genug. Durch die Verwendung der hydraulisch unterstützen elektromechanischen Bremse H-EMB sowie des bzw. der Traktionsmotor(en) kann die erforderliche Dynamik und der benötigte Bremsdruck aufgebaut werden (rechtes Diagramm).

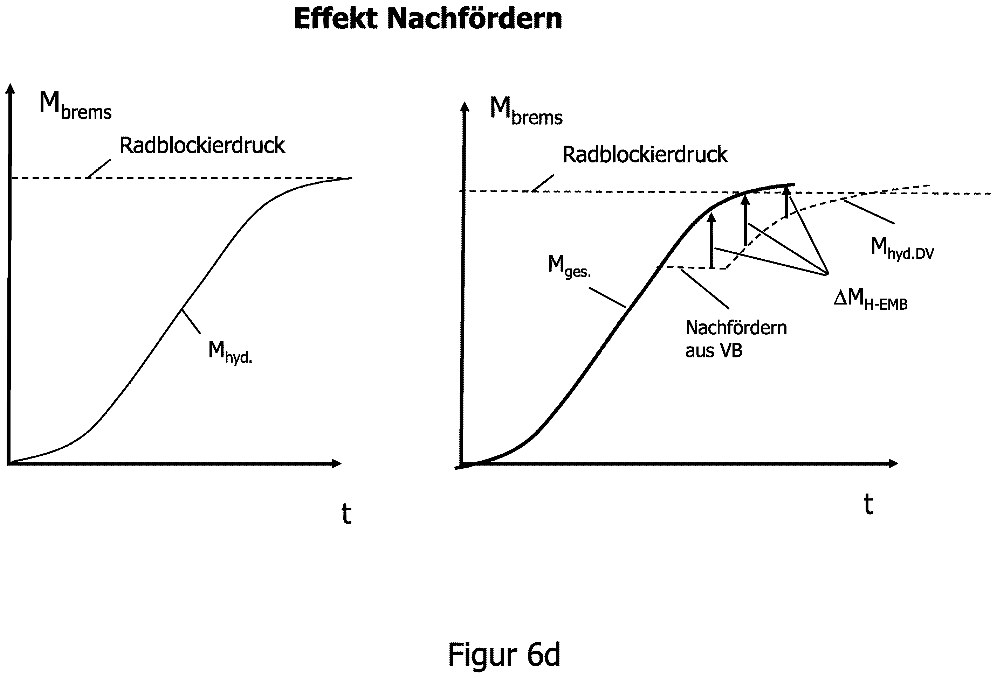

Die Figur 6d zeigt Momentendiagramme zur Darstellung des Bremsmomenten- verlaufs Mbremswährend des Nachförderns von Bremsfluid. Während des Nachfördern aus dem Vorratsbehälter VB kann mittels der Druckversorgungseinrichtung DV1 kein weiter Bremsdruck aufgebaut werden. Durch die Hinzunahme der Bremsmomente Mmax,TMdes Traktionsmotors TM sowie das mittels der H-EMB erzeugte Bremsmoment DMH-EMB kann auch während des Nachfördern das Bremsmoment Mbremsweiter erhöht werden, wodurch eine Unterbrechung des Druckaufbaus vermieden wird.

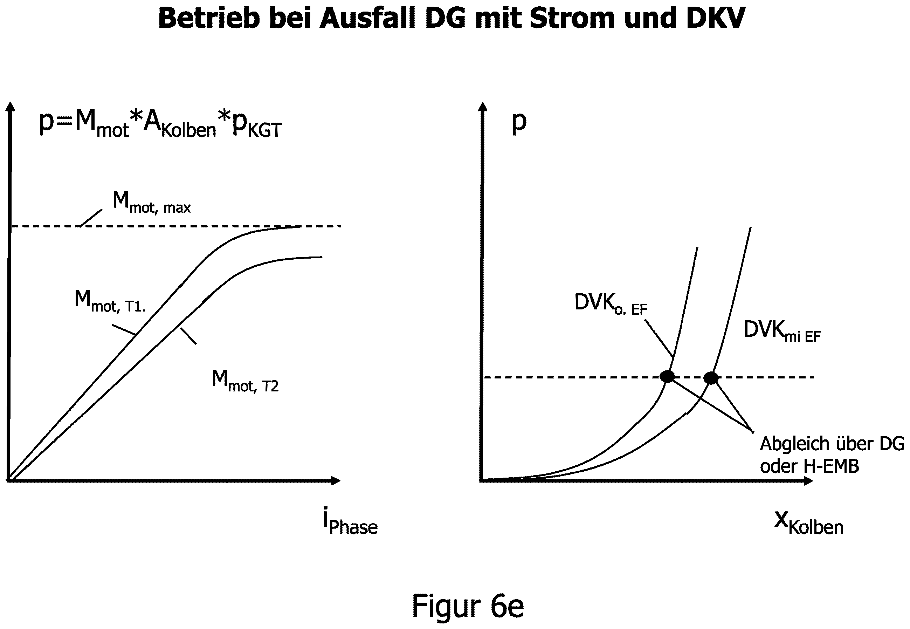

Die Figur 6e zeigt eine Bremsdruckregelung bei Ausfall des Druckgebers DG, wobei dann mittels Strommessung des Motorstroms iphase und Auswertung der Druck-Volumen-Kennlinie eine Regelung des Motormomentes MMotund damit der Regelung des Drucks p vorgenommen wird. Dabei wird auch die Motortemperatur T berücksichtigt, da unter Temperatur sich die Drehmomentkonstante reduziert und somit einen Einfluss auf den Proportionalitätsfaktor kt * (I-Br%*AT) zwischen Motormoment MMC* und Motorstrom iphase hat. Hierdurch ergibt sich vorteilhaft eine Redundanz der Druckmessung. So kann auch auf einen Druckgeber verzichtet werden. Die Kalibrierung der Regelung erfolgt dabei durch den Druckgeber und es wird primär mit Strom, Weg und Druckvolumenkennlinie geregelt werden.

Wobei
Mmot=kt* iphase*( I- Br%* DT) kt: Drehmomentkonstante Iphase: Phasenstrom DT: Temperaturänderung in k
Br%: typischer Br = kt-Abfall mit Zunahme der Temperatur

Die Fig. 9a zeigt eine Darstellung einer gesamten Baueinheit bestehend aus Motor 22, Pumpe Z, HCU und ECU, welche in der Lage ist, die Druckregelung und Steuerung für Systeme wie z.B. Bremse, Getriebe usw. auszuüben. Hierbei soll im Wesentlichen die Kombination Motor mit Pumpe dargestellt werden. Im Lagerflansch 18 ist die Pumpe angeordnet oder in einem separaten Pumpengehäuse 40, wie es in der oberen Bildhälfte dargestellt ist an HCU oder ECU befestigt. In Fig. 9a ist eine Version gezeigt, welche ein zusätzliches Motorlager 20 benötigt, in welchem die Welle 1 gelagert ist. Der Motor setzt sich wie üblich zusammen aus Rotor 21, welcher über den Mitnehmer 10a mit der Welle 1 verbunden ist. Der Rotor 21 wird über einen Permanentmagneten im Gehäuse 30 durch seine Kraft axial vorgespannt. Dies ist eine Lösung für den Motorhersteller, welcher Motor mit Gehäuse 22 und Stator und Wicklung 23 fertigt, prüft und an den Systemlieferanten zuliefert. Hierbei wird der Motor ohne Pumpe mit einer Hilfswelle geprüft. Danach wird bei Ausbau der Welle der Rotor durch die axiale Magnetkraft zentriert, so dass anschließend bei der Endmontage die Welle 1 mit dem Rotor zusammengebaut werden kann. Das Antriebsgehäuse muss hier zusätzlich mit dem Flansch 18 bei 25a - in der unteren Bildhälfte dargestellt - zusammengefügt und befestigt werden, z. B. mit Federn, welche segmentförmig über drei Verbindungen aufgesteckt werden. Hierbei ist auch eine Gehäusedichtung 31 notwendig. Die Befestigung kann durch Verstemmen, bei 25 von Motorflansch mit HCU oder ECU, siehe obere Bildhälfte 28, erfolgen. Hier ist die Version Pumpe mit Pumpengehäuse darge- stellt. Der Motor ist hier als bürstenloser Motor dargestellt, der einen Motorsensor für die Kommutierung und Steuerung der Volumenförderung der Pumpe braucht. Dieser Motorsensor ist entfernt vom Antriebsgehäuse 22 angeordnet, wobei eine Sensorwelle 26, welche an der Antriebswelle 1 angeordnet bzw. befestigt ist, ein Sensortarget 27 trägt. Dieses Target 27 wirkt auf das Sensorelement 28, welches auf der Leiterplatte der ECU angeordnet ist. Die Wicklung ist über Kontaktschienen 24 mit der ECU verbunden.

Der Motor mit Lagerflansch 18 kann direkt mit dem Hydraulikgehäuse HCU, welches Ventile oder sonstige hydr. Komponenten beinhaltet, mit der Pumpe verbunden werden. Wenn dies nicht der Fall ist, so bietet sich eine Verbindung des Antriebsgehäuses 22, 18 direkt mit dem Gehäuse der ECU an.

Es ist ebenso möglich, die Zahnradpumpe Z in einem Pumpengehäuse 40 anzuordnen, welches direkt mit Hydraulikgehäuse HCU verbunden wird, wie es in Figur 9a in der oberen Hälfte der Antriebswelle 1 dargestellt ist. Vor dem Zusammenbau von Pumpengehäuse 40 und Hydraulikgehäuse HCU bzw. Pumpengehäuse 40 und ECU wird zunächst die Zahnradpumpe Z im Pumpengehäuse 40 integriert bzw. montiert, wobei anschließend der Rotor 21 auf die Welle 1 aufgepresst und anschließend mit dem Lager 20 zusammengebaut wird. Hierbei kann die Zugkraft des Magneten 30 zusätzlich auf den Rotor 21 und das Lager 20 wirken, womit das Lager wie ein Vierpunktlager wirkt. Damit ist das Motorgehäuse 22 mit der Zahnradpumpe Z und deren Pumpengehäuse 40 verbunden und kann im nächsten Schritt mit dem Hydraulikgehäuse HCU bzw. dem Elektronikgehäuse ECU verbunden werden. Dazu wird die Befestigungsschraube 41 verwendet. Die Welle 1 ist zuvor in den Außenscheiben 7.1 und 7.2 zentriert, so dass das Pumpengehäuse 40 vor der Verschraubung mit dem Hydraulikgehäuse HCU bzw. dem Elektronikgehäuse ECU mit der Welle 1 zentriert ist.

Die Druckversorgungseinrichtung gemäß Fig. 9b verwendet eine 2-stufige Pumpe mit langer Gleit- oder Wälzlagerung, welche keine getrennte Motorlagerung erfordert. Dementsprechend ist der Motoraufbau mit Gehäuse vereinfacht. Der Rotor 21 sitzt mit Mitnehmer 10a auf der Motorwelle und ist axial mit dem Sicherungsring verbunden. Das Pumpengehäuse ragt hier etwas in die HCU hinein.

Nachfolgend werden Beispiele erläutert.

Beispiel 1. Bremssystem für ein Fahrzeug, folgende Komponenten aufweisend :
- mindestens einen hydraulischen Bremskreis (BK1, BK2) mit jeweils mindestens einer hydraulisch wirkenden Radbremse (RB1, RB2, RB3, RB4, H-EMB),
- eine Druckversorgungseinrichtung (DV1, DV2) zur Druckregelung in den Radbremsen (RB1-RB4, H-EMB), die von einem elektromotorischen Antrieb (MI, M2) angetrieben sind,
- wobei die Primärbremseinrichtung zusätzlich mindestens eine elektronische Steuer- und Regeleinrichtung (DV ECU1, DV ECU2) und eine Ventilanordnung (HCU) mit Ventilen zum radindividuellen Einstellen von Bremsdrücken und/oder zum Trennen bzw. Verbinden der Radbremsen (RB1, RB2, RB3, RB4, H-EMB) mit der Druckversorgungseinrichtung (DV1, DV2) aufweist,
- eine mittels einer Betätigungseinrichtung (BE), insbesondere in Form eines Bremspedals, betätigbaren Kolben-Zylinder-Einheit (HZ), die mit mindestens einem hydraulischen Bremskreis verbunden bzw. verbindbar ist,
- mindestens einem Bremsaggregat, insbesondere einem elektrischen Antriebsmotor (TM) mit einer Leistung von größer gleich 30 KW, einer elektrischen Parkbremse (EPB), einer hydraulisch-unterstützten elektromechanischen Bremse (H-EMB) und/oder einer elektromechanischen Bremse (EMB),
- mindestens ein elektrischer Antriebsmotor (TM1, TM2) für mindestens eine Achse oder ein Rad des Fahrzeugs, welcher zum Antrieb und Abbremsen der Achse bzw. des Rades genutzt wird,
- eine zentrale Steuereinheit (M-ECU) zur Ansteuerung des Bremssystems und des/der elektrischen Antriebsmotors(en) (TM1, TM2), dadurch gekennzeichnet, dass eine oder mehrere Komponenten oder deren Teilkomponenten der Primärbremseinrichtung redundant ausgebildet ist bzw. sind, und dass bei Teilausfall oder Komplettausfall der Primärbremseinrichtung eine Bremskraft an mindestens einer Achse oder mindestens einem Rad mittels der noch funktionsfähigen Komponenten der Primärbremseinrichtung, der Betätigungseinrichtung und/oder mindestens eines Bremsaggregates erzeugbar ist.

Beispiel 2. Bremssystem nach Beispiel 1, dadurch gekennzeichnet, dass die Druckversorgungseinrichtung eine Kolben-Zylinder-Einheit aufweist, deren Kolben über ein Getriebe, insbesondere einen Spindelantrieb von einem elektromotorischen Antrieb (MI) zur Druckregelung in den Radbremsen (RB1-RB4, H-EMB) verstellt wird

Beispiel 3. Bremssystem nach Beispiel 1, dadurch gekennzeichnet, dass die Druckversorgungseinrichtung eine Rotationspumpe, insbesondere in Form einer Zahnradpumpe, aufweist, die von einem elektromotorischen Antrieb (MI) zur Druckregelung in den Radbremsen (RB1-RB4, H-EMB) verstellt wird.

Beispiel 4. Bremssystem nach Beispiel 1, dadurch gekennzeichnet, dass bei Teilausfall oder Komplettausfall der Primärbremseinrichtung oder deren Komponenten zumindest die achsindividuelle Bremsregelung mit reduzierter Verzögerung, insbesondere im Bedarfsfall mit größer 0,3g, erfolgt.

Beispiel 5. Bremssystem nach Beispiel 1 oder 2, dadurch gekennzeichnet, dass die Druckversorgungseinrichtung (DV1) eine zweifach -redundante Steuer- und Regeleinheit (DV-ECU1, DV-ECU2) zur Ansteuerung ihres elektromotorischen Antriebs (MI) und/oder der Antriebsmotor (MI) redundante Motorwicklungen, insbesondere 2x3 Phasen, aufweist.

Beispiel 6. Bremssystem nach Beispiel 3, dass die zweifach-redundante Steuer- und Regeleinheit zwei separate Steuer- und Regeleinheiten (DV-ECU1, DV-ECU2) aufweist, wobei jede elektronische Steuer- und Regeleinheit (DV-ECU1, DV-ECU2) voneinander getrennte Wicklungen bzw. Wicklungssysteme des elektromotorischen Antriebs (MI) ansteuert, derart, dass bei Ausfall einer elektronischen Steuer- und Regeleinheit (ECU1, ECU2) oder eines Wicklungssystems mittels des elektromotorischen Antriebs (MI) noch ein Drehmoment über das andere Wicklungssystem erzeugbar ist.

Beispiel 7. Bremse nach einem der vorhergehenden Beispiele, dadurch gekennzeichnet, dass das Bremssystem, insbesondere auch die elektronischen Steuer- und Regeleinheiten (DV-ECU1, DV-ECU2) der Druckversorgungseinrichtung (DV1), von einer übergeordneten Steuerungseinheit (M-ECU) gesteuert wird.

Beispiel 8. Bremssystem nach einem der Beispiele 1 bis 7, dadurch gekennzeichnet, dass die Druckversorgungseinrichtung (DV1) zusammen mit der Ventilanordnung (R-HCU) und der mindestens einen elektronischen Steuer- und Regeleinheit (DV-ECU1, DV-ECU2) zu einem Modul bzw. Baugruppe zusammengefasst sind.

Beispiel 9. Bremssystem nach einem der vorhergehenden Beispiele, dadurch gekennzeichnet, dass das Bremssystem eine Betätigungseinrichtung (BE), insbesondere in Form eines Pedalgefühlsimulator, zur Erfassung des Fahrerwunsches aufweist, und dass die Betätigungseinrichtung (BE) eine eigene Baugruppe bildet, welche an der Spritzwand des Fahrzeuges befestigt ist.

Beispiel 10. Bremssystem nach Beispiel 9, dadurch gekennzeichnet, dass die Betätigungseinrichtung (BE) eine, insbesondere mittels eines Bremspedals (1), betätigbare Kolben-Zylinder-Einheit (HZ) mit einem Kolben aufweist, die mit mindestens einem hydraulischen Bremskreis (BK1, BK2), insbesondere dem Bremskreis mit den Radbremsen der Vorderachse (VA), verbunden bzw. verbindbar ist.

Beispiel 11. Bremssystem nach einem der vorhergehenden Beispiele, dadurch gekennzeichnet, dass das Bremssystem im Regelbetrieb mit geschlossenem Bremskreis, d.h. im Regelbetrieb erfolgt kein Druckabbau über Magnetventile in das Vorratsbehältnis, betrieben wird und/oder der Druck in den Radbremsen (RB1-RB4) des jeweiligen Bremskreises (BK1, BK2) im Multiplexverfahren und/oder gleichzeitig eingeregelt bzw. eingestellt wird.

Beispiel 12. Bremssystem nach einem der vorhergehenden Beispiele, dadurch gekennzeichnet, dass jede Radbremse (RB1, RB2, RB3, RB4) ein Schaltventil (SV1, SV2, SV3, SV4) aufweist, welche insbesondere als stromlos offene Kugelsitzventile ausgebildet sind, und die derart an die Radbremsen angeschlossen sind, dass im bestromten Zustand der Schaltventile der Druck in der bzw. den jeweiligen Radbremse(n) der Druck gehalten wird und die sich im unbestromten Zustand durch den Druck in der Radbremse selbstständig öffnen, insbesondere indem der Druck der Radbremse auf die Kugel des Kugelsitzschaltventils wirkt und das Ventil öffnet.

Beispiel 13. Bremssystem nach einem der vorhergehenden Beispiele, dadurch gekennzeichnet, neben den Schaltventilen (SV1, SV2, SV3,SV4) an zumindest einer Radbremse zusätzlich ein stromlos geschlossenes Auslassventil (AV) vorgesehen ist, dass einen Druckabbau im Regelbetrieb, insbesondere bei sehr hohen Druckdynamikanforderungen, z.B. bei high-µ-ABS- Regelung, insbesondere bei Ausfall der Druckversorgung DV1, DV2 bzw. der Steuer- und Regeleinrichtung (ECU) der Druckversorgung, in einer Radbremse (RB1-RB4) über das Öffnen eines Auslassventils (AV) in den Vorratsbehälter (VB), insbesondere im erweiterten Multiplexbetrieb (sog. MUX 2.0-Verfahren) erfolgt.

Beispiel 14. Bremssystem nach einem der vorhergehenden Beispiele, dadurch gekennzeichnet, dass mindestens eine Radbremse, vorzugsweise zwei Radbremsen, eine hydraulisch unterstützte elektromechanische Bremse (H- EMB), eine elektrische Parkbremse (EPB) oder eine elektromechanische Bremse (EMB) ist oder neben der Radbremse (RB1-RB4) eine zusätzliche Parkbremse (EPB) oder elektromechanische Bremse (EMB) auf das Rad abbremsend einwirkt.

Beispiel 15. Bremssystem nach einem der vorhergehenden Beispiele, dadurch gekennzeichnet, dass das Bremssystem, insbesondere auch die elektronischen Steuer- und Regeleinheiten (ECU1, ECU2) der Druckversorgungseinrichtung (DV1, DV), von einer übergeordneten Steuerungseinheit (M- ECU) gesteuert wird.

Beispiel 16. Bremssystem nach einem der vorhergehenden Beispiele, dadurch gekennzeichnet, dass der mindestens eine elektrische Antriebsmotor (TM1, TM2) für je mehrere Achsen oder mehrere Räder einer Achse des Fahrzeugs vorgesehen sind und die Antriebsmotoren (TM1, TM2) beim Abbremsen einer oder mehrerer Achsen bzw. Räder zur Rekuperation von Bremsenergie genutzt wird.

Beispiel 17. Bremssystem nach einem der vorhergehenden Beispiele, dadurch gekennzeichnet, dass beim Bremsen unterschiedliche Bremsmomente an den Achsen zur Bremskraftverteilung und/oder an den Rädern einer Achse zur Erzeugung eines Giermoments bzw. Lenkungseingriffs (Torque Vectoring) mittels der Radbremsen (RB1, RB2, RB3, RB4) und/oder den Antriebsmotoren (TM1, TM2) erzeugt werden.

Beispiel 18. Bremssystem nach einem der vorhergehenden Beispiele, dadurch gekennzeichnet, dass die übergeordnete Steuerungseinheit (M-ECU) die Druckversorgungseinrichtung (DV, DV1), Ventile, elektrischen Antriebsmotoren (TM1, TM2) und/oder EMB bzw. H-EMB während des Bremsvorganges und/oder ABS-Regelbetriebes und/oder zur Diagnose des Bremssystems ansteuert.

Beispiel 19. Bremssystem nach einem der vorhergehenden Beispiele, dadurch gekennzeichnet, dass der Druckversorgungseinrichtung (DV1) ein Trennventil (TV) zugeordnet ist, wobei durch Verschließen des Trennventils (TV) die Druckversorgungseinrichtung (DV1), insbesondere bei deren Ausfall, von dem bzw. den Bremskreis(en) (BK1, BK2) abtrennbar ist.

Beispiel 20. Bremssystem nach einem der vorhergehenden Beispiele, dadurch gekennzeichnet, dass mindestens eine elektronische Steuer- und Regeleinheit (DV-ECU) der Druckversorgungseinrichtung (DV1) und eine Ventilanordnung (R-HCU) eine separate Spannungsversorgung und insbesondere Signalübertragung aufweisen, insbesondere alle Module (DV-ECU1, DV- ECU2, R-HCU) durch mindestens zwei Bordnetze (BN1, BN2) versorgt werden und/oder redundante Signalübertragungen (DS1, DS2) zur zentralen Steuereinheit (M-ECU) aufweisen.

Beispiel 21. Bremssystem nach einem der vorhergehenden Beispiele, dadurch gekennzeichnet, dass entweder die Druckregelung in einem Bremskreis (BK1, BK2) unter Verwendung mindestens eines Drucksensors und/oder über die Strommessung des Motorstroms des Antriebes und Wegsteuerung des Kolbens und/oder Stromregelung des Antriebes der Druckversorgungseinrichtung (DV1, DV), insbesondere unter Berücksichtigung der Temperatur des Antriebes, erfolgt.

Beispiel 22. Bremssystem nach einem der vorhergehenden Beispiele, dadurch gekennzeichnet, dass es redundante Dichtungen und redundante Regel- und Steuereinheiten (DV-ECU1, DV-ECU2) aufweist, und dass der Antrieb (MI) der Druckversorgungseinrichtung (DV1) mehrere Wicklungs- bzw. Phasensysteme, insbesondere 2x3 Phasen, aufweist, und dass mittels Sensoren der Motorstrom (i), der Rotor-Winkel (a), insbesondere die Temperatur (T) gemessen und bei der Druckregelung berücksichtigt wird, und dass insbesondere eine redundante Versorgung über zwei Bordnetze (BN1, BN2) bzw. Spannungsniveaus gegeben ist, und dass eine redundante Signalübertragung (DS1, DS2) vorgesehen ist.

Beispiel 23. Bremssystem nach einem der vorhergehenden Beispiele, dadurch gekennzeichnet, dass ein kombinierter Einsatz von Druckversorgungseinrichtungen (DV1), hydraulisch unterstützter elektromechanischen Brem- se(n) (H-EMB), elektrische(n) Parkbremse(n) (EPB) und/oder elektromechanische(n) Bremse(n) (EMB) und/oder Antriebsmotor(en) (TM, TM1, TM2) im Regelbetrieb für einen schnelleren Bremskraftanstieg mit kürzerer Zeit zum Aufbau des Blockierdrucks (Time to Lock - TTL) oder bei Ausfall einer oder mehrerer Komponenten des Bremssystem erfolgt.

Beispiel 24. Bremssystem nach einem der vorhergehenden Beispiele, dadurch gekennzeichnet, dass die Druckversorgungseinrichtung (DV1, DV), eine Rotationspumpe, insbesondere in Form einer Zahnradpumpe, aufweist, wobei mittels der Rotationspumpe (RP) eine geregelte Volumensteuerung sowohl für den Druckaufbau als auch den Druckabbau vornehmbar ist.

Beispiel 25. Bremsvorrichtung nach Beispiel 24, dadurch gekennzeichnet, dass die Rotationspumpe eine Zahnradpumpe (ZRP) ist, die einstufig oder mehrstufig ausgebildet ist, wobei mehrere Stufen hydraulisch in Reihe angeordnet sind.

Beispiel 26. Bremsvorrichtung nach Beispiel 24 oder 25, dadurch gekennzeichnet, dass die Zahnradpumpe (ZRP) in dem Motorgehäuse des sie antreiben den Motors, insbesondere zumindest teilweise innerhalb dessen Rotors des antreibenden Motors angeordnet bzw. integriert ist.

Beispiel 27. Bremsvorrichtung nach einem der Beispiele 24 bis 26, dadurch gekennzeichnet, dass die Rotationspumpe (ZRP), deren Antrieb und Ventile und Druckgeber (DG) in einer Baueinheit, einem Modul bzw. einem Gehäuse zusammengefasst bzw. angeordnet sind und eine Druckversorgungseinrichtung bilden.

Beispiel 28. Bremsvorrichtung nach einem der Beispiele 24 bis 27, dadurch gekennzeichnet, dass der Antrieb bzw. Rotor des Antriebs der Rotationspumpe trocken läuft bzw. vom zu fördernden Hydraulikmedium der Rotationspumpe, insbesondere mittels mindestens eine Dichtung von den Hydraulikmedium fördernden Teilen der Rotationspumpe abdichtend getrennt ist.

Beispiel 29. Bremssystem nach einem der vorhergehenden Beispiele, dadurch gekennzeichnet, dass mindestens eine hydraulisch unterstützte elektromechanische Bremse (H-EMB) vorgesehen ist, welche über eine Hydraulikleitung mit einer Druckversorgungseinrichtung (DV1, DV2) verbindbar ist und durch Druckaufbau oder Druckabbau durch die Druckversorgungseinrichtung eine hydraulische Kraft (Fhyd) erzeugt wird, wobei zusätzlich über einen Elektromotor (EM) und ein nicht-hydraulische Getriebevorrichtung (FE) auf die Radbremse eine Kraft erzeugt wird und beide Kräfte gleich zeitig oder unabhängig voneinander auf die Bremsscheibe wirken.

Beispiel 30. Fahrdynamiksystem mit einem Bremssystem nach einem der vorhergehenden Beispiele, dadurch gekennzeichnet, dass das Fahrdynamiksystem mittels des Bremssystems, der elektrischen Antriebsmotoren und einer elektrischen Servolenkung (EPS), insbesondere auch mittels mindestens einer hydraulisch unterstützter Bremse (H-EMB) und/oder mindestens einer elektrischen Parkbremse (EMB), fahrdynamische Regelfunktionen des Fahrzeugs mit seiner übergeordneten zentralen Steuereinheit (M-ECU) steuert.

Beispiel 31. Fahrdynamiksystem nach Beispiel 30, dadurch gekennzeichnet, dass die fahrdynamischen Regelfunktionen die elektrische Bremskraftverstärkung (e-BKV), der ABS-Betrieb, die Stabilitätsregelung (ESP), Rekuperation und Lenkung, insbesondere Lenkeingriffe wie Torque-Vektoring, sind.

Beispiel 32. Fahrzeug mit einem Bremssystem oder einem Fahrdynamiksystem nach einem der vorhergehenden Beispiele.

Beispiel 33. Verfahren zum Betrieb eines Bremssystems nach einem der Beispiele 1 bis 29 oder eines Fahrzeuges nach Beispiel 30, dadurch gekennzeichnet, dass mindestens achsweise, vorzugsweise radindividuell, die Verzögerung der Räder mittels der Druckversorgungseinrichtung und den elektrischen Antriebsmotor(en) (TM1, TM2) und/oder der hydraulisch unterstützten elektromechanischen Bremse (H-EMB) bzw. der elektromechanischen Bremse (EMB), erfolgt.

Beispiel 34. Verfahren nach Beispiel 33 oder zum Betrieb eines Bremssystems nach einem der Beispiele 1 bis 29, dadurch gekennzeichnet, dass achsweise die Verzögerung der Räder mittels der Druckversorgungseinrichtung und gleichzeitig mit mindestens einem Antriebsmotor (TM1, TM2) erfolgt, wodurch gleichzeitig eine Rekuperation und eine elektrische Bremskraftverteilung (EBV) mit unterschiedlichen Bremsmomenten an den Achsen realisiert wird.

Beispiel 35. Verfahren nach Beispiel 33 oder 34 oder zum Betrieb eines Bremssystems nach einem der Beispiele 1 bis 29, dadurch gekennzeichnet, dass Lenkungs- bzw. Giermomenteingriffe / Torque-Vectoring mittels der Druckversorgungseinrichtung und/oder dem bzw. den elektrischen Antriebsmotor(en) (TM, TM1, TM2) und/oder der hydraulisch unterstützten elektromechanischen Bremse (H-EMB) bzw. der elektromechanischen Bremse (EMB), erfolgt.

Beispiel 36. Verfahren nach Beispiel 35, dadurch gekennzeichnet, dass radindividuell, die Bremsmomente an den Rädern mittels der Druckversorgungseinrichtung(-en) erzeugt werden, um Giermomente für Lenkungseingriffe unterstützend zur elektrischen Lenkung (EPS) oder im Notfall bei Ausfall der elektrischen Lenkung eine Lenkbarkeit sicherzustellen.

Beispiel 37. Verfahren nach Beispiel 35, dadurch gekennzeichnet, dass radindividuell, die Bremsmomente an den Rädern mittels der Druckversorgungseinrichtung (DV1) und insbesondere Traktionsmotoren (TM1, TM2) erzeugt werden, um Giermomente für Lenkungseingriffe zu erzeugen, um ein Fahrzeug auch ohne eine elektrische Servolenkung EPS zu lenken.

Beispiel 38. Verfahren nach einem der Beispiele 33 bis 37 oder zum Betrieb eines Bremssystems nach einem der Beispiele 1 bis 29, dadurch gekennzeichnet, dass unter Verwendung eines Temperatursensors die Temperatur (T) des Antriebes ermittelt wird und die Temperatur (T) bei der Ermittlung des vom Motor erzeugten Drehmomentes berücksichtigt wird.

Beispiel 39. Verfahren nach einem der Beispiele 33 bis 38 oder zum Betrieb eines Bremssystems nach einem der Beispiele 1 bis 29, dass zur Druckregelung neben der Stromregelung auch die Kolbenposition und die Druckvolumenkennlinie herangezogen wird und die Veränderung der Druckvolumenkennlinie bei Einflussfaktoren, z.B. Lufteinschluss, durch den Druckgeber oder die H-EMB angepasst werden.

Beispiel 40. Verfahren nach Beispiel 38 und 39, dadurch gekennzeichnet, dass durch Einsatz der Verfahren gemäß der Beispiele 38 und 39 in Kombination eine hochpräzise Druckregelung ohne Drucksensor mit Stromregelung des Elektromotors und/oder Kolbenwegsteuerung bei Einsatz einer Druckversorgung mit Kolben-Zylinder-Einheit oder Winkelpositionssteuerung bei Einsatz einer Druckversorgung mit Rotationspumpe bei gleichzeitiger Nutzung der Druckvolumenkennlinie erfolgt, insbesondere bei Ausfall von Komponenten oder mindestens eines Drucksensors eingesetzt wird.

Beispiel 41. Verfahren nach einem der Beispiele 33 bis 40 oder zum Betrieb eines Bremssystems nach einem der Beispiele 1 bis 29, dadurch gekennzeichnet, dass zur Regelung der Fahrstabilität die radindividuellen Regelmöglichkeiten über die Druckversorgungseinrichtung (DV1) und/oder die hydraulisch unterstützte elektromechanische(n) Bremse(n) (H-EMB), elektrische(n) Parkbremse(n) (EPB) und/oder elektromechanische(n) Bremse(n) (EMB) verwendet werden.

Beispiel 42. Verfahren nach einem der Beispiele 33 bis 41 oder zum Betrieb eines Bremssystems nach einem der Beispiele 1 bis 29, dadurch gekennzeichnet, dass die Druckversorgungseinrichtung (DV1) bei geschlossenem bzw. geschlossenen Trennventil(-en) (TV) Fluid aus dem Vorratsbehälter (VB) nachfördert.

Beispiel 43. Verfahren zum Betrieb eines Bremssystems nach einem der vorgenannten Beispiele, dadurch gekennzeichnet, dass die Schaltventile (SV1, SV2, SV3, SV4) mittels PWM-Verfahren getaktet werden, um unterschiedliche Ventilöffnungsquerschnitte zu realisieren und damit unterschiedliche Druckverläufe an mehreren Radbremsen beim gleichzeitigen Druckaufbau oder Druckabbau über die Druckversorgungseinrichtung zu realisieren.

Beispiel 44. Fahrzeug mit einem Bremssystem nach einem der vorhergehenden Beispiele 1 bis 29, dadurch gekennzeichnet, dass die Druckregelung für die Radbremsen (RB1-RB4) in beiden Fahrzeugachsen (VA, HA) über die Druckversorgungseinrichtung (DV1) erfolgt, wobei die erste Fahrzeugachse, insbesondere Vorderachse (VA) konventionelle Radbremsen (RB1, RB2) aufweist und die zweite Fahrzeugachse, insbesondere die Hinterachse (HA), neben den konventionellen Radbremsen (RB3, RB4) noch zusätzlich hydraulisch unterstützte elektromechanische Bremsen (H-EMB) oder elektromechanische Bremsen (EMB) aufweist, wobei optional an mindestens einer Achse oder mindestens einem Rad ein elektrischer Antriebsmotor bzw. Traktionsmotor (TM1, TM2) angeordnet ist.

Beispiel 45. Fahrzeug mit einem Bremssystem nach einem der vorhergehenden Beispiele 1 bis 29, dadurch gekennzeichnet, dass die Druckregelung für die Radbremsen (RB1, RB2) nur einer ersten Fahrzeugachse, insbesondere der Vorderachse (VA), über die Druckversorgungseinrichtung (DV1) erfolgt, wobei die andere zweite Fahrzeugachse, insbesondere Hinterachse (HA), elektromechanische Bremsen (EMB) oder elektrische Parkbremsen (EPB) aufweist und zumindest einen elektrischen Antriebsmotor bzw. Traktionsmotor (TM1, TM2) aufweist.

Beispiel 46. Fahrzeug nach Beispiel 44 oder 45, dadurch gekennzeichnet, dass der bzw. die Traktionsmotor(en) (TM1, TM2) zusammen mit der bzw. den elektromechanischen Bremse(n) (EMB) bzw. elektrischen Parkbremse(n) (EPB) zum Antrieb und Abbremsen der Räder der zweiten Achse (HA) verwendet wird bzw. werden.

Beispiel 47. Fahrzeug nach einem der Beispiele 44 bis 46 oder mit einem Bremssystems nach einem der vorgenannten Beispiele 1 bis 29, dadurch gekennzeichnet, dass die Druckversorgungseinrichtung des Bremssystems keine redundante Steuer- und Regeleinrichtung DV-ECU aufweist, und dass im Fehlerfalle ein Druckaufbau durch den Fahrer mittels der Betätigungseinrichtung (BE) erfolgt, wobei ein zusätzliches Verzögerungsmoment mittels des Motors (TM) erzeugt wird, und das optional mindestens eine hydraulisch unterstützte Bremse (H-EMB) vorgesehen wird.

## Patentansprüche

1. Verfahren zum Betrieb eines Bremssystems oder eines Fahrdynamiksystems mit einem Bremssystem für ein Fahrzeug;
- wobei das Bremssystem mindestens zwei hydraulisch wirkende Radbremsen (RB1, RB2, RB3, RB4);
- genau eine von einem elektromotorischen Antrieb (M1, M2) angetriebene Druckversorgungseinrichtung (DV1), welche eine elektronische Steuer- und Regeleinheit (DV-ECU1, DV-ECU2) aufweist, zur Druckregelung in den Radbremsen (RB1-RB4, H-EMB); und
- mindestens eine übergeordnete zentrale Steuereinheit (M-ECU) zum Steuern der einzelnen Steuer- und Regeleinheiten (DV-ECU1, DV-ECU2) der Komponenten des Bremssystems umfasst;
- wobei:
- die übergeordnete zentrale Steuereinheit (M-ECU) mindestens einen elektrischen Antriebsmotor (TM1, TM2, TM) so ansteuert, dass eine unterstützende Bremskraft mittels des Antriebsmotors (TM1, TM2) erzeugt wird;
und/oder
- die übergeordnete zentrale Steuereinheit (M-ECU) dazu eingerichtet ist, die Druckversorgungseinrichtung (DV1) für radindividuelle Bremsmomenteingriffe anzusteuern und/oder eine Lenkung (EPS) mindestens einer Fahrzeugachse anzusteuern;
und/oder
- die übergeordnete zentrale Steuereinheit (M-ECU) eine Dämpfung und/oder eine Wankstabilisierung des Fahrzeuges ansteuert.

2. Verfahren nach Anspruch 1, **dadurch gekennzeichnet, dass** das Bremssystem, insbesondere auch die elektronischen Steuer- und Regeleinheiten (DV-ECU1, DV-ECU2) der Druckversorgungseinrichtung (DV1), von einer übergeordneten Steuerungseinheit (M-ECU) gesteuert wird.

3. Verfahren nach einem der vorhergehenden Ansprüche, **dadurch gekennzeichnet, dass** eine Ventilanordnung (HCU) der Druckversorgungseinheit (DV1) mit Ventilen zum radindividuellen Einstellen von Bremsdrücken und/oder zum Trennen bzw. Verbinden der Radbremsen (RB1, RB2, RB3, RB4, H-EMB) mit der Druckversorgungseinrichtung (DV1) durch eine mit der übergeordneten zentralen Steuereinheit (M-ECU) verbundene und durch diese ansteuerbare Ventilsteuerung (R-ECU) angesteuert wird.

4. Verfahren nach einem der vorhergehenden Ansprüche, **dadurch gekennzeichnet, dass** eine Betätigungseinrichtung (BE) elektrisch mit der übergeordneten zentralen Steuereinheit (M-ECU) und/oder mit mindestens einer elektronischen Steuer- und Regeleinheit (DV-ECU1, DV-ECU2) der Druckversorgungseinheit (DV1) verbunden ist.

5. Verfahren nach einem der vorhergehenden Ansprüche, **dadurch gekennzeichnet, dass** das Bremssystem im Regelbetrieb mit geschlossenem Bremskreis, d.h. im Regelbetrieb erfolgt kein Druckabbau über Magnetventile in das Vorratsbehältnis, betrieben wird und/oder der Druck in den Radbremsen (RB1-RB4) des jeweiligen Bremskreises (BK1, BK2) im Multiplexverfahren und/oder gleichzeitig eingeregelt bzw. eingestellt wird.

6. Verfahren nach einem der vorhergehenden Ansprüche, **dadurch gekennzeichnet, dass** der mindestens eine elektrische Antriebsmotor (TM1, TM2) für je mehrere Achsen oder mehrere Räder einer Achse des Fahrzeugs vorgesehen sind und die Antriebsmotoren (TM1, TM2) beim Abbremsen einer oder mehrerer Achsen bzw. Räder zur Rekuperation von Bremsenergie genutzt wird.

7. Verfahren nach einem der vorhergehenden Ansprüche, **dadurch gekennzeichnet, dass** beim Bremsen unterschiedliche Bremsmomente an den Achsen zur Bremskraftverteilung und/oder an den Rädern einer Achse zur Erzeugung eines Giermoments bzw. Lenkungseingriffs (Torque Vektoring) mittels der Radbremsen (RB1, RB2, RB3, RB4) und/oder den Antriebsmotoren (TM1, TM2) erzeugt werden.

8. Verfahren nach einem der vorhergehenden Ansprüche, **dadurch gekennzeichnet, dass** die Druckversorgungseinrichtung (DV1), Ventile, elektrische Antriebsmotoren (TM1, TM2) und/oder elektromechanische Bremsen (EMB) und/oder hydraulisch unterstützte elektromechanische Bremsen (H-EMB) während des Bremsvorganges und/oder ABS-Regelbetriebes und/oder zur Diagnose des Bremssystems durch die übergeordnete zentrale Steuerungseinheit (M-ECU) angesteuert werden.

9. Verfahren nach einem der vorhergehenden Ansprüche, **dadurch gekennzeichnet, dass** der Druckversorgungseinrichtung (DV1) ein Trennventil (TV) zugeordnet ist, wobei durch Verschließen des Trennventils (TV) die Druckversorgungseinrichtung (DV1), insbesondere bei deren Ausfall, von dem bzw. den Bremskreis(en) (BK1, BK2) abtrennbar ist.

10. Verfahren nach einem der vorhergehenden Ansprüche, **dadurch gekennzeichnet, dass** die Druckversorgungseinrichtung (DV1), eine hydraulisch unterstützte elektromechanische Bremse (H-EMB), eine elektrische Parkbremse (EPB) und/oder eine elektromechanische Bremse (EMB) und/oder Antriebsmotor(en) (TM, TM1, TM2) im Regelbetrieb für einen schnelleren Bremskraftanstieg mit kürzerer Zeit zum Aufbau des Blockierdrucks (Time to Lock - TTL) oder bei Ausfall einer oder mehrerer Komponenten des Bremssystem kombiniert eingesetzt werden.

11. Verfahren nach einem der vorhergehenden Ansprüche, **dadurch gekennzeichnet, dass** durch die übergeordnete zentrale Steuereinheit (M-ECU) fahrdynamische Regelfunktionen des Fahrzeugs gesteuert werden, wobei die die fahrdynamischen Regelfunktionen eine elektrische Bremskraftverstärkung (e-BKV), ein ABS-Betrieb, eine Stabilitätsregelung (ESP), eine Rekuperation und eine Lenkung, insbesondere eine Lenkeingriff wie beim Torque-Vektoring, sind.

12. Verfahren nach einem der vorhergehenden Ansprüche, **dadurch gekennzeichnet, dass** mindestens achsweise, vorzugsweise radindividuell, die Verzögerung der Räder mittels der Druckversorgungseinrichtung und den elektrischen Antriebsmotor(en) (TM1, TM2) und/oder der hydraulisch unterstützten elektromechanischen Bremse (H-EMB) und/oder der elektromechanischen Bremse (EMB), erfolgt.

13. Verfahren nach einem der vorhergehenden Ansprüche, **dadurch gekennzeichnet, dass** achsweise die Verzögerung der Räder mittels der Druckversorgungseinrichtung und gleichzeitig mit mindestens einem Antriebsmotor (TM1, TM2) erfolgt, wodurch gleichzeitig eine Rekuperation und eine elektrische Bremskraftverteilung (EBV) mit unterschiedlichen Bremsmomenten an den Achsen realisiert wird.

14. Verfahren nach einem der vorhergehenden Ansprüche, **dadurch gekennzeichnet, dass** Lenkungs- bzw. Giermomenteingriffe / Torque-Vectoring mittels der Druckversorgungseinrichtung und/oder dem bzw. den elektrischen Antriebsmotor(en) (TM, TM1, TM2) und/oder der hydraulisch unterstützten elektromechanischen Bremse (H-EMB) bzw. der elektromechanischen Bremse (EMB), erfolgt.

15. Verfahren nach einem der vorhergehenden Ansprüche, **dadurch gekennzeichnet, dass** radindividuell, die Bremsmomente an den Rädern mittels der Druckversorgungseinrichtung(-en) erzeugt werden, um Giermomente für Lenkungseingriffe unterstützend zur elektrischen Lenkung (EPS) oder im Notfall bei Ausfall der elektrischen Lenkung eine Lenkbarkeit sicherzustellen.

16. Verfahren nach einem der vorhergehenden Ansprüche, **dadurch gekennzeichnet, dass** radindividuell, die Bremsmomente an den Rädern mittels der Druckversorgungseinrichtung (DV1) und insbesondere Traktionsmotoren (TM1, TM2) erzeugt werden, um Giermomente für Lenkungseingriffe zu erzeugen, um ein Fahrzeug auch ohne eine elektrische Servolenkung EPS zu lenken.

17. Verfahren nach einem der vorhergehenden Ansprüche, **dadurch gekennzeichnet, dass** zur Regelung der Fahrstabilität die radindividuellen Regelmöglichkeiten über die Druckversorgungseinrichtung (DV1) und/oder die hydraulisch unterstützte elektromechanische(n) Bremse(n) (H-EMB), elektrische(n) Parkbremse(n) (EPB) und/oder elektromechanische(n) Bremse(n) (EMB) verwendet werden.

18. Verfahren nach einem der vorhergehenden Ansprüche, **dadurch gekennzeichnet, dass** die Druckregelung für die Radbremsen (RB1, RB2) nur einer ersten Fahrzeugachse, insbesondere der Vorderachse (VA), über die Druckversorgungseinrichtung (DV1) erfolgt, wobei die andere zweite Fahrzeugachse, insbesondere Hinterachse (HA), elektromechanische Bremsen (EMB) oder elektrische Parkbremsen (EPB) aufweist und zumindest einen elektrischen Antriebsmotor bzw. Traktionsmotor (TM1, TM2) aufweist.

19. Verfahren nach Anspruch 16, **dadurch gekennzeichnet, dass** für die Räder der zweiten Fahrzeugachse jeweils ein Traktionsmotor (TM1, TM2) vorgesehen ist.

20. Verfahren nach Anspruch 16 oder 17, **dadurch gekennzeichnet, dass** die Traktionsmotoren (TM1, TM2) zusammen mit den elektromechanischen Bremsen (EMB) und/oder elektrischen Parkbremsen (EPB) zum Antrieb und Abbremsen der Räder der zweiten Achse (HA) verwendet werden.

21. Verfahren nach einem der Ansprüche 16 bis 18, **dadurch gekennzeichnet, dass** mittels der Traktionsmotoren (TM1, TM2) und/oder der elektromechanischen Bremsen (EMB) und/oder elektrischen Parkbremsen (EPB) radindividuelle Bremsmomente erzeugbar sind.
